# FASCICULE DE BREVET EUROPEEN

(11) **EP 3 717 979 B1**
(45) Date de publication et mention de la délivrance du brevet: **13.04.2022**
(21) Numéro de dépôt: 18825761.2
(22) Date de dépôt: 30.11.2018
(51) Int. Cl.: G05D 1/00

(54) **SYSTÈME DE CONDUITE À DISTANCE D'UN VÉHICULE SANS PILOTE**
SYSTEM ZUR FERNSTEUERUNG EINES FAHRERLOSEN FAHRZEUGS
SYSTEM FOR REMOTELY DRIVING A DRIVERLESS VEHICLE

(30) Priorité: 30.11.2017 FR 1771282
(43) Date de publication de la demande: 07.10.2020
(73) Titulaire: Lambert, Marc, 13390 Auriol (FR)
(72) Inventeur: Lambert, Marc, 13390 Auriol (FR)
(74) Mandataire: Germain Maureau
(86) Numéro de dépôt international: PCT/FR2018/053067
(87) Numéro de publication internationale: WO 2019/106318

(56) Documents cités:
- CN-A- 106 464 740
- US-A- 5 263 396
- US-A1- 2010 010 673
- US-A1- 2015 346 722

## Description

La présente invention se rapporte à un système de conduite à distance d'un véhicule sans pilote, de type véhicule terrestre motorisé, évoluant dans un environnement, et plus particulièrement un système de conduite à distance comprenant le véhicule sans pilote et un poste de conduite à distance connecté à distance au véhicule sans pilote via un canal de communication établi dans un réseau de télécommunication.

L'invention se situe donc dans le domaine de la téléconduite, ou conduite à distance, de véhicules terrestres motorisés sans pilote. Ce système de conduite à distance s'inscrit dans le domaine de la téléopération d'un objet mobile motorisé, autrement dit de la téléconduite de véhicule et en particulier de véhicules terrestres motorisés.

Les véhicules terrestres motorisés (aussi appelés VTM tel que décrit dans L'article 2 de la Convention du Conseil de l'Europe du 4 mai 1973) assurent principalement le transport des biens et des personnes.

Il est aujourd'hui proposé des véhicules entièrement autonomes, dont les bénéfices générés sont innombrables et incontestables pour un très grand nombre d'applications (réduction du coût du transport, optimisation du temps de transport, réduction des besoins en énergie et réduction de la pollution, décongestion du trafic...).

Cependant, il demeure un grand nombre de limitations et de risques que les véhicules autonomes ne sont à ce jour pas en mesure de résoudre, tels que le coût d'un véhicule entièrement autonome, la responsabilité juridique en cas d'accident, le comportement du véhicule autonome face à des situations imprévisibles, la réticence des utilisateurs à déléguer le contrôle du véhicule, la protection contre le piratage, la relation avec les agents de police, le respect de la vie privée des usagers de ces véhicules...

Ceci démontre l'importance du rôle qu'occupe le conducteur dans l'utilisation d'un véhicule terrestre motorisé dans un environnement à l'intérieur duquel des personnes sont présentes, tel qu'un environnement urbain, mais aussi à quel point sa présence à son bord en conditionne les usages.

A ce titre, il est envisageable de distinguer deux cas de figure. Dans un premier cas de figure, le véhicule est un véhicule classique conduit par un conducteur, et dans ce cas les personnes autour du véhicule identifient le conducteur et actionnent des mécanismes de relations sociales qui gèrent à la fois les interactions opérationnelles et la relation de confiance. Dans un deuxième cas, le véhicule est un véhicule autonome conduit par un autopilote, et dans ce cas les personnes autour du véhicule disposent d'une capacité très réduite d'interactions opérationnelles (pour la plupart formalisées dans le code de la route, telles que les clignotants, appels de phare, klaxon, feu de stop) amenant à un niveau de confiance très altéré voire inexistant.

Il est par ailleurs connu, notamment du document US 2015/346722, d'utiliser des systèmes de conduite à distance comprenant le véhicule sans pilote et un poste de conduite à distance connecté à distance au véhicule sans pilote, où le poste de conduite accueille un conducteur qui va pouvoir piloter à distance le véhicule sans pilote.

L'état de la technique peut également être illustré par les enseignements du document US 2010/010673 qui porte sur des robots pilotés à distance, avec une première station distante qui reçoit des signaux vidéo du robot et qui est maître dans le pilotage à distance du robot et avec une seconde station distante qui reçoit des signaux vidéo du robot et qui est observatrice.

Il est par ailleurs connu du document CN 106 464 740 un véhicule de travail comprenant un système de diagnostic à distance permettant une vérification d'un état de fonctionnement du véhicule en fonctionnement sur un site distant.

Il est aussi connu du document US 5 263 396 un système de commande à distance pour un véhicule de combat comprenant un appareil de commande à distance pour fournir des signaux au véhicule pour commander une pluralité de fonctions de véhicule, un appareil de pilotage qui reçoit les signaux de l'appareil de commande à distance pour faire fonctionner les fonctions du véhicule conformément aux signaux, et un appareil pour désactiver de manière sélective l'appareil de pilotage afin de permettre une commande non à distance des fonctions du véhicule.

Cependant, malgré la présence d'un conducteur distant, les véhicules sans pilote classiques n'autorisent pas une interaction complète avec les personnes présentes dans l'environnement de circulation du véhicule sans pilote, et ils ne sont donc par conséquent pas adaptés pour certaines utilisations et dans certains environnements où les interactions avec les personnes présentes dans l'environnement du véhicule sont nécessaires, voire indispensables pour une bonne réalisation du service ou pour une acceptation tant par les personnes que par les communes.

Autrement dit, pour les personnes dans l'environnement (piétons, cyclistes, conducteurs, agents de police, ...), le véhicule sans pilote reste un véhicule qui n'a pas de pilote présent dans le véhicule, quand bien même un conducteur distant assure la conduite, et qui ne permet donc pas d'interagir avec un pilote physiquement présent pour rassurer, réagir si besoin, échanger une communication, bref permettre les échanges indispensables à une bonne intégration du véhicule dans son environnement.

Un autre inconvénient réside dans l'indispensable nécessité d'une bonne communication entre le conducteur distant, situé dans le poste de conduite à distance, et le véhicule sans pilote, car le véhicule sans pilote est en mouvement et qu'une perte de communication peut conduire à une perte de contrôle et donc à un accident.

La présente invention a pour but de résoudre en tout ou partie le problème précité, en proposant une solution pour une intégration optimale dans un environnement d'un véhicule terrestre motorisé sans pilote, piloté à distance par un conducteur situé dans un poste de conduite à distance.

A cet effet, elle propose un système de conduite à distance d'un véhicule sans pilote évoluant dans un environnement, ledit système de conduite à distance comprenant le véhicule sans pilote, qui est du type véhicule terrestre motorisé, et un poste de conduite à distance connecté à distance au véhicule sans pilote via un canal de communication établi dans un réseau de télécommunication.

Selon l'invention, le véhicule sans pilote comprend :
- des dispositifs de commande pour commander un déplacement du véhicule sans pilote et comprenant au moins un dispositif de commande de freinage, un dispositif de commande de direction et un dispositif de commande d'accélération ;
- plusieurs capteurs de véhicule couplés au véhicule sans pilote, dont au moins un capteur optique et un capteur acoustique pour une captation de signaux analogiques optiques et acoustiques de l'environnement dans lequel évolue le véhicule sans pilote, au moins un capteur de mouvement pour une captation de mouvements au sein du véhicule sans pilote, et au moins un capteur d'état pour un captation d'une information d'état relative au véhicule sans pilote ;
- un terminal de téléprésence du conducteur relié aux dispositifs de commande pour les commander en fonction de signaux de conduite à distance provenant du poste de conduite à distance, ledit terminal de téléprésence du conducteur étant également relié aux capteurs de véhicule pour recevoir leurs signaux de captation ;
- un dispositif de télécommunication relié au terminal de téléprésence du conducteur et prévu pour établir une communication à distance avec le poste de conduite à distance afin de recevoir des signaux de conduite à distance et d'émettre les signaux de captation issus des capteurs de véhicule.

Par ailleurs, selon l'invention, le poste de conduite à distance comprend :
- un poste d'accueil pour accueillir un conducteur ;
- des dispositifs de pilotage comprenant au moins un dispositif de pilotage de freinage, un dispositif de pilotage de direction et un dispositif de pilotage d'accélération, sur lesquels peut agir le conducteur pour produire des signaux de commande à distance ;
- des émetteurs de téléconduite dont au moins un émetteur optique pour reproduire les signaux analogiques optiques captés par ledit au moins un capteur optique du véhicule sans pilote, au moins un émetteur acoustique pour reproduire les signaux analogiques acoustiques captés par ledit au moins un capteur acoustique du véhicule sans pilote, au moins un émetteur de mouvement pour reproduire les mouvements captés par ledit au moins un capteur de mouvement du véhicule sans pilote, et au moins un émetteur d'état pour informer le conducteur de l'information d'état capté par ledit au moins un capteur d'état du véhicule sans pilote ;
- un terminal de téléprésence du véhicule relié aux dispositifs de pilotage pour recevoir les signaux de conduite à distance, ledit terminal de téléprésence du véhicule étant également relié aux émetteurs de téléconduite pour les commander en fonction des signaux de captation issus des capteurs de véhicule ;
- un dispositif de communication relié au terminal de téléprésence du véhicule et prévu pour établir une connexion à distance avec le véhicule sans pilote via le réseau de télécommunication afin de recevoir les signaux de captation issus des capteurs de véhicule et d'émettre les signaux de conduite à distance.

Dans le cadre de l'invention, un terminal de téléprésence, qu'il s'agisse du terminal de téléprésence du conducteur ou du terminal de téléprésence du véhicule, est un moyen de traitement de données qui permet à une personne (le conducteur) ou à un objet (le véhicule) d'avoir une impression d'être présent ou d'avoir un effet à un endroit autre que leur emplacement réel.

Dans le cadre de l'invention, le système de conduite à distance comprend en outre des moyens d'interaction permettant à un conducteur présent dans le poste de conduite à distance d'interagir de manière bidirectionnelle avec une ou plusieurs personnes présentes autour du véhicule sans pilote grâce à des transmissions optiques et acoustiques bidirectionnelles entre le véhicule sans pilote et le poste de conduite à distance, lesdits moyens d'interaction comprenant :
- des capteurs de poste présents sur le poste de conduite à distance dont au moins un capteur optique et un capteur acoustique pour une captation de signaux analogiques optiques et acoustiques en provenance du poste d'accueil accueillant le conducteur, et le terminal de téléprésence du véhicule est relié aux capteurs de poste pour recevoir leurs signaux de captation et pour les communiquer au véhicule sans pilote via les dispositifs de télécommunication ;
- des émetteurs de véhicule présents sur le véhicule sans pilote dont au moins un émetteur optique pour reproduire les signaux analogiques optiques captés par ledit au moins un capteur optique du poste de conduite à distance et au moins un émetteur acoustique pour reproduire les signaux analogiques acoustiques captés par ledit au moins un capteur acoustique du poste de conduite à distance, et le terminal de téléprésence du conducteur est relié aux émetteurs de véhicule pour les commander en fonction des signaux de captation des capteurs de poste ;
- un outil de transmission gérant la transmission des signaux de captation et des signaux de conduite à distance en continue de part et d'autre du canal de communication entre le véhicule sans pilote et le poste de conduite à distance, dans lequel l'outil de transmission gère un flux montant qui part du poste de conduite à distance pour être transmis au véhicule sans pilote, et un flux descendant qui part du véhicule sans pilote pour être transmis au poste de conduite à distance, et où l'outil de transmission comprend pour le flux descendant des moyens de traitement mettant en œuvre une synchronisation des signaux de captation issus des capteurs de véhicule, dans lequel ledit outil de transmission comprend pour le flux montant des moyens de traitement mettant en oeuvre une synchronisation des signaux de conduite à distance issus des dispositifs de pilotage et de signaux de captations issus des capteurs de poste.

Ainsi, grâce à l'invention, le poste de conduite à distance est équipé d'un terminal de téléprésence du véhicule permettant au conducteur d'interagir avec le véhicule ainsi qu'avec les personnes présentes autour du véhicule, et de l'autre côté le véhicule sans pilote est équipé d'un terminal de téléprésence du conducteur permettant aux personnes présentes autour du véhicule d'interagir avec le conducteur distant ; ces interactions entre le conducteur et les personnes étant ainsi bidirectionnelles, et à la fois visuelles et auditives.

Le système de conduite à distance est donc conçu pour assurer une expérience de conduite du conducteur distant semblable en tous points à la même expérience dans le cas de la conduite du même véhicule avec le conducteur à son bord. Il est par ailleurs bien évident que ce système de conduite à distance permet une transmission optique (et notamment vidéo) de manière bidirectionnelle (dans les deux sens entre le véhicule sans pilote et le poste de conduite à distance) grâce aux capteurs optiques présents à la fois dans le véhicule sans pilote et dans le poste de conduite à distance.

Il est à noter que les moyens d'interaction évoqués ci-dessus intègrent également les autres organes précités, qui sont les dispositifs de commande, les capteurs de véhicule, les terminaux de téléprésence, les dispositifs de communication, les dispositifs de pilotage et les émetteurs de conduite, et forment ensemble la base du système de conduite à distance et donc de la téléprésence à la fois côté poste de conduite à distance et côté véhicule sans pilote.

Pour cela, le système de conduite à distance met en œuvre une télécommunication entre le poste de conduite à distance et le véhicule sans pilote, qui fait appel à une synchronisation des données sur le flux descendant (et éventuellement sur l'ensemble de la chaine de transmission) comprenant la captation, la transmission et la restitution de la vision, de l'audition et des mouvements, de sorte que l'interaction entre le conducteur distant et le véhicule sans pilote soit naturelle.

Cette maîtrise de la synchronisation, mise en œuvre par l'outil de transmission, permet avantageusement d'offrir une sortie d'effet « miroir » entre le conducteur présent dans le poste de conduite à distance et la reproduction du conducteur dans le véhicule (reproduction à la fois visuelle et acoustique), ce qui aboutit à la fois à :
- une maitrise de la synchronicité des interactions de part et d'autre du système (temps réel maitrisé) ; et
- une identification des personnes (le conducteur et la ou les personnes autour du véhicule) de part et d'autre du système (expérience sociale optimale).

Il est ainsi à noter que l'invention est particulièrement avantageuse dans des applications de service dans des environnements sociaux tels qu'une ville, un quartier, un village ou encore un contexte d'activité professionnel tels que la logistique portuaire, le transport de biens et marchandises, la manutention en travaux public, les activités de nettoyage dans les lieux publics, car l'identification du conducteur par les personnes présentes autour du véhicule est un aspect incontournable pour obtenir des interactions naturelles, complexes mais aussi à haute valeur ajoutée dans le service rendu.

De plus, le système de conduite à distance permet au conducteur de piloter à distance le véhicule en éprouvant les mêmes sensations (vision, audition, mouvements) et en opérant les mêmes actions que s'il se trouvait à son bord, et il lui permet aussi de conserver une interaction naturelle avec toute personne se trouvant à proximité du véhicule, telle qu'un piéton ou un conducteur d'un autre véhicule. Dans ce type d'interaction, la communication est principalement visuelle et auditive, grâce aux capteurs de poste et aux émetteurs de véhicule, permettant ainsi de s'affranchir de l'absence physique de pilote dans le véhicule, et donc de conserver une communication bidirectionnelle classique qui ne requiert aucune adaptation du comportement du conducteur ou des personnes évoluant autour du véhicule sans pilote.

En d'autres termes, l'invention permet au conducteur distant de percevoir l'environnement du véhicule de la même manière au cas où il se trouverait à bord du véhicule, grâce aux sens visuel, sonore et haptique (ici les mouvements) qui sont majeurs pour la qualité d'appréciation et d'appréhension de la façon de conduire le véhicule. Par exemple, on ne conduit pas de la même façon sur une autoroute parfaitement goudronnée que sur une autoroute en cours de rainurage (renouvellement du revêtement de la route).

Ainsi, la reproduction fidèle des sensations de conduite pour le conducteur au travers des sens visuel, sonore et haptique vont être indispensables à la pleine possession des moyens nécessaires à la conduite à distance du véhicule et l'invention le permet grâce à une fidèle reproduction de ces sens qui est assuré par une synchronisation parfaitement contrôlée de l'ensemble des sens sollicités et des commandes.

Par ailleurs, le véhicule sans pilote comprend une unité de conduite autonome ou assistée reliée aux dispositifs de commande et reliée au terminal de téléprésence du conducteur pour une commande exclusive des dispositifs de commande par l'unité de conduite autonome ou assistée ou par le terminal de téléprésence du conducteur en fonction d'une comparaison entre au moins un paramètre de conduite mesuré en temps réel et au moins un seuil de sécurité associé.

Ainsi, cette unité de conduite autonome ou assistée (autrement appelée unité d'assistance à la conduite ou de conduite autonome) va pouvoir prendre le relais ou la place du conducteur à distance pour piloter le véhicule, lorsque des conditions de sécurité le nécessitent, de telles conditions de sécurité étant définies par des paramètres de conduite et des seuils de sécurité associés. Ainsi, le terminal de téléprésence du conducteur dans le véhicule sans pilote communique avec cette unité de conduite autonome ou assistée ; cette communication étant en charge de gérer la prise de contrôle exclusive d'un seul desdits éléments (unité de conduite autonome ou assistée, et terminal de téléprésence du conducteur) sur les dispositifs de commande du véhicule.

Dans une réalisation particulière, le véhicule sans pilote est un véhicule de livraison de biens et de marchandises, ledit véhicule sans pilote présentant un compartiment intérieur pour le stockage de biens et de marchandises.

Ainsi, l'invention trouve une application avantageuse avec un véhicule de livraison de biens et de marchandises, en particulier dans un environnement urbain ou péri-urbain, étant tout de même noté que l'invention peut s'appliquer à tout type de véhicule appartenant à la catégorie des véhicules terrestres motorisés.

Dans le domaine de la livraison de biens et de marchandises, et en particulier de la livraison ou logistique dite du « dernier kilomètre », il est aujourd'hui indispensable d'apporter une solution qui concilie de façon satisfaisante les principaux critères que sont le coût, l'occupation des voiries, la pollution et la rapidité d'exécution, et l'invention permet de répondre au moins en partie à ces différents critères.

En effet, l'invention assure une dissociation entre le conducteur et le véhicule, ce qui permet de gérer une flotte de plusieurs véhicules de livraison sans pour autant nécessiter une augmentation du nombre de conducteurs. Par conséquent, il y a une amélioration du service rendu et une optimisation des ressources humaines nécessaires à la bonne exécution du service de livraison.

De plus, l'invention permet, avec l'absence du conducteur dans le véhicule, d'offrir une capacité de chargement accrue. Autrement dit, il est possible d'augmenter significativement le volume et la charge utile de biens et de marchandises transportés surtout dans le cas de l'utilisation de petits véhicules.

En outre, le véhicule de livraison n'ayant pas vocation à transporter des personnes, il peut être allégé en supprimant les éléments de sécurité et les équipements normalement prévus pour le conducteur (ceinture de sécurité, airbags, amortisseurs de chocs, siège,...). Le véhicule ainsi allégé optimise l'utilisation de son énergie, ce qui lui permet d'allonger significativement la distance de parcours et la réduction de son empreinte énergétique.

Enfin, les dimensions du véhicule de livraison peuvent être réduites au maximum requis pour le transport des biens et des marchandises permettant ainsi de réduire d'autant l'espace occupé sur les voiries.

En conséquence, la présente invention permet de mieux concilier les quatre critères précédemment cités, à savoir le coût, l'occupation des voiries, la pollution et la rapidité d'exécution.

Selon une caractéristique, le compartiment intérieur sert de support pour le au moins un émetteur optique du véhicule sans pilote, ce qui est avantageux pour placer le ou les émetteurs optiques en partie haute pour être visible pour les personnes environnantes, tout en assurant un espace de stockage en partie basse.

Selon une autre caractéristique, le véhicule sans pilote présente des vitrages avant, de droite et de gauche et le au moins un émetteur optique du véhicule sans pilote est disposé à l'intérieur du véhicule sans pilote de sorte à être visible de l'extérieur via les vitrages avant, droite et gauche.

Avantageusement, le au moins un émetteur optique comprend un système d'affichage avant placé en face du vitrage avant, un système d'affichage de droite placé en face du vitrage de droite et un système d'affichage de gauche placé en face du vitrage de gauche.

Selon une variante, le au moins un émetteur optique comprend un générateur d'hologramme.

Selon une possibilité, le ou chaque système d'affichage est un écran.

Selon une possibilité de l'invention, le au moins un capteur de mouvement du véhicule sans pilote comprend au moins une centrale inertielle mesurant les mouvements de roulis, de tangage et de lacet du véhicule sans pilote à un emplacement de conduite, et le au moins un émetteur de mouvement comprend au moins un actionneur pour reproduire les mouvements de roulis, de tangage et de lacet dans le poste d'accueil du poste de conduite à distance.

Il est à noter que l'emplacement de conduite dans le véhicule sans pilote correspond à l'emplacement fictif du conducteur dans le véhicule sans pilote, afin qu'il reçoive des informations (notamment des informations de mouvement du véhicule) telles que perçues dans cet emplacement de conduite. Si le véhicule sans pilote est un véhicule terrestre motorisé classique qui a fait l'objet de modifications pour l'adapter à la présente invention, alors cet emplacement de conduite correspondra avantageusement à l'emplacement initialement prévu pour le conducteur, en face du volant de direction.

Selon une autre possibilité de l'invention, le au moins un capteur de mouvement du véhicule sans pilote comprend des accéléromètres mesurant les vibrations au niveau des dispositifs de commande à un emplacement de conduite, et le au moins un émetteur de mouvement comprend des vibreurs pour reproduire les vibrations dans les dispositifs de pilotage correspondants du poste de conduite à distance.

Dans un mode de réalisation, l'unité de conduite autonome ou assistée comprend un moyen de sélection mettant en œuvre une sélection entre :
- un mode de pilotage autonome ou assistée correspondant à un pilotage exclusivement par l'unité de conduite autonome ou assistée ; ou
- un mode de pilotage à distance correspondant à un pilotage par le conducteur distant ;
et par ailleurs ce moyen de sélection est conformé pour mettre en œuvre :
- une collecte d'informations relatives à un ou plusieurs paramètres de conduite ;
- une comparaison du ou des paramètres de conduite avec un ou des seuils de sécurité associés ;
- une activation du mode de pilotage autonome ou assistée si un des paramètres de conduite dépasse le seuil de sécurité correspondant

Selon une caractéristique, les paramètres de conduite comprennent au moins un paramètre de communication représentatif du canal de communication établi entre les dispositifs de télécommunication.

Ainsi, selon ce(s) paramètre(s) de communication représentatif(s) du canal de communication, l'unité de conduite autonome ou assistée prend la place ou non du conducteur à distance pour piloter le véhicule.

Dans une réalisation particulière, le paramètre de communication est sélectionné parmi l'un au moins des paramètres suivants :
- paramètre représentatif d'une qualité de signal ;
- paramètre représentatif d'une vitesse de transmission ;
- paramètre représentatif d'une latence de transmission ;
- paramètre représentatif d'une bande passante de la communication ;
- paramètre représentatif d'un débit de transmission ;
- paramètre représentatif d'une authentification des données ;
- paramètre représentatif d'une synchronisation entre le terminal de téléprésence du conducteur et le terminal de téléprésence du véhicule qui communiquent dans le canal de communication.

Selon une autre caractéristique, les paramètres de conduite comprennent au moins un paramètre choisi parmi les paramètres suivants :
- paramètre représentatif d'une trajectoire ou d'une direction du véhicule sans pilote ;
- paramètre représentatif d'une vitesse ou d'une accélération ou d'une décélération du véhicule sans pilote ;
- paramètre représentatif d'une présence d'un obstacle sur la trajectoire du véhicule sans pilote ;
- paramètre représentatif d'un niveau de réactivité du conducteur.

Selon une réalisation, le moyen de sélection est conformé pour mettre en œuvre :
- une collecte d'informations relatives à un ou plusieurs paramètres de communication ;
- une collecte d'informations relatives à un paramètre représentatif d'une vitesse du véhicule sans pilote ;
- une collecte d'informations relatives à un paramètre représentatif d'une présence d'un obstacle sur la trajectoire du véhicule sans pilote ;
- une évaluation d'une distance de sécurité de conduite à distance sur la base du paramètre représentatif d'une vitesse du véhicule sans pilote et d'au moins un paramètre de communication ;
- une évaluation d'une distance limite de sécurité établie sur la base du paramètre représentatif d'une présence d'un obstacle sur la trajectoire du véhicule sans pilote, du paramètre représentatif d'une vitesse du véhicule sans pilote et d'un temps de réaction maximal entre l'apparition d'un obstacle sur la trajectoire du véhicule sans pilote et l'action du conducteur sur le véhicule sans pilote dans un mode de pilotage à distance ;
- une activation du mode de pilotage autonome ou assistée si la distance de sécurité de conduite à distance dépasse la distance limite de sécurité.

Dans une réalisation avantageuse, les moyens de traitement de l'outil de transmission pour le flux montant mettent en œuvre une synchronisation et un multiplexage des signaux de conduite à distance issus des dispositifs de pilotage et des signaux de captation issus des capteurs de poste.

La mise en œuvre du multiplexage, en plus de la synchronisation, permet d'optimiser les transmissions en réduisant les retards, et donc d'améliorer la conduite à distance en terme de réactivité.

Selon une possibilité, les moyens de traitement de l'outil de transmission pour le flux montant comprennent un premier bloc de traitement mettant en œuvre un encodage et une compression des signaux de captation issus des capteurs de poste, suivi d'un deuxième bloc de traitement mettant en œuvre une synchronisation et un multiplexage des signaux de conduite à distance issus des dispositifs de pilotage et des signaux de captation encodés et compressés dans le premier bloc de traitement.

Avantageusement, les moyens de traitement de l'outil de transmission pour le flux descendant mettent en œuvre une synchronisation et un multiplexage des signaux de captation issus des capteurs de véhicule.

Selon une possibilité, les moyens de traitement de l'outil de transmission pour le flux descendant comprennent un premier bloc de traitement mettant en œuvre un encodage et une compression des signaux de captation issus des capteurs de véhicule, suivi d'un deuxième bloc de traitement mettant en œuvre une synchronisation et un multiplexage des signaux de captation encodés et compressés dans le premier bloc de traitement.

D'autres caractéristiques et avantages de la présente invention apparaîtront à la lecture de la description détaillée ci-après, d'un exemple de mise en œuvre non limitatif, faite en référence aux Figures annexées dans lesquelles :
- la Figure 1 est une représentation schématique d'un système de conduite à distance selon l'invention, avec un véhicule sans pilote et un poste de conduite à distance connectés à distance ;
- la Figure 2 est une représentation schématique des éléments du véhicule sans pilote de la Figure 1 servant à la conduite à distance ;
- la Figure 3 est une représentation schématique des éléments du poste de conduite à distance de la Figure 1 servant à la conduite à distance ;
- la Figure 4 est une représentation schématique d'un véhicule sans pilote selon l'invention, illustrant des systèmes d'affichage permettant une interaction entre le conducteur distant et les personnes se trouvant à proximité du véhicule sans pilote ;
- la Figure 5 représente schématiquement un outil de gestion des communications qui gère les transmissions des différentes données dans un système de conduite à distance selon l'invention, entre le véhicule sans pilote et le poste de conduite à distance, cette Figure 5 illustrant les différents types de données utilisés dans le présent système de conduite à distance ainsi que le retard engendré par chaque étape de traitement ;
- la Figure 6 est un diagramme illustrant une méthode de synchronisation du flux de données télémétriques avec au moins un flux de données vidéo, pour une mise en œuvre dans un système de conduite à distance selon l'invention ;
- la Figure 7 est une représentation schématique d'un véhicule sans pilote selon l'invention, illustrant une condition de sécurité associée à un paramètre représentatif d'une présence d'un obstacle sur la trajectoire du véhicule sans pilote ;
- la Figure 8 est un diagramme de séquence représentant les différentes séquences d'une méthode de sélection du pilotage exclusif entre l'unité de conduite autonome ou assistée (pilotage automatisé) le terminal de téléprésence du conducteur (pilotage à distance par le conducteur distant).

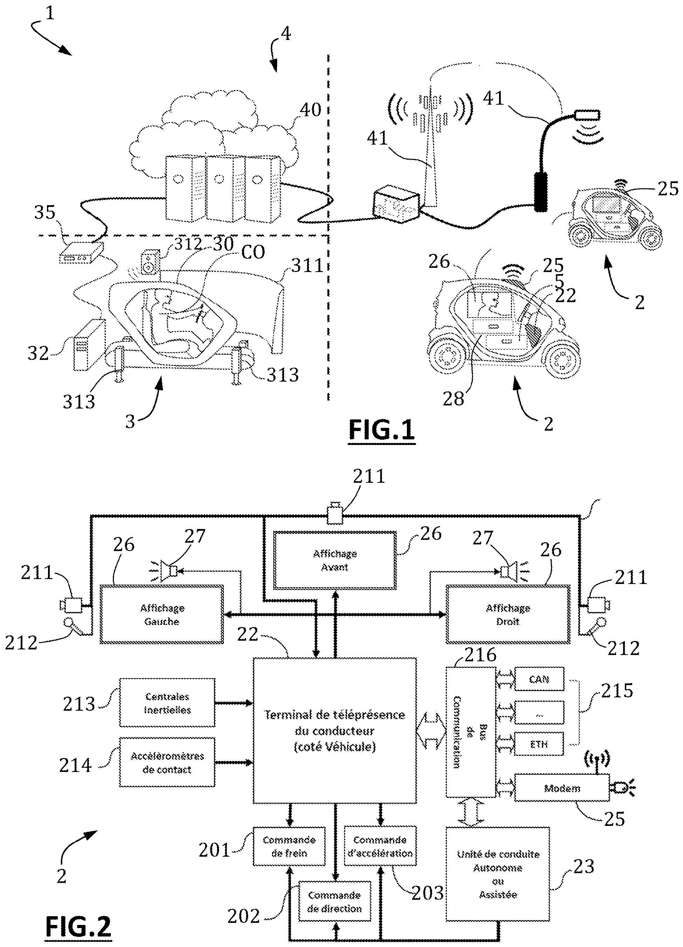

En référence à la Figure 1, un système de conduite à distance 1 selon l'invention comprend au moins un véhicule sans pilote 2 (autrement appelé « AUTOPOD ») évoluant dans un environnement, et au moins un poste de conduite à distance 3 (autrement appelé « TELEPOD ») connecté à distance au véhicule sans pilote 2 via un canal de communication établi dans un réseau de télécommunication 4. Le véhicule sans pilote 2 est ainsi sur un premier site, tandis que le poste de conduite à distance 3 est dans un second site distant du premier site.

Il est possible de compléter le système de conduite à distance 1 par l'ajout de parties complémentaires permettant d'en augmenter les fonctionnalités, la modularité ou tout autres types d'évolutions dudit système de conduite à distance 1.

Pour établir le canal de communication 40 sans fil entre le véhicule sans pilote 2 et le poste de conduite à distance 3, le réseau de télécommunication 4 inclue une plateforme de service de téléprésence 40 en charge de la gestion centralisée de tous les terminaux connectés au réseau de télécommunication 4, y inclus le(s) poste(s) de conduite à distance 3 et le(s) véhicule(s) sans pilote 2.

La plateforme de service de téléprésence 40 est accessible partout où le réseau de télécommunication 4 est déployé. Cependant, du fait des fluctuations de bande passante et de latence sur l'ensemble du réseau de télécommunication 4, il appartient à la plateforme de service de téléprésence 40 de déterminer si la connexion entre les terminaux 2, 3 est possible.

La plateforme de service de téléprésence 40 est un moyen de gestion informatique installé sur des serveurs de données connectés au réseau de télécommunication 4. L'emplacement géographique des serveurs de données n'a pas d'influence sur la mise en œuvre de la plateforme de service de téléprésence 40. Cette plateforme de service de téléprésence 40 offre une gestion centralisée permettant de recenser l'ensemble des postes de conduite à distance 3 et des véhicules sans pilote 2.

Le réseau de télécommunication 4 inclue également des relais de communication sans fil 41 répartis dans l'environnement où circule(nt) le(s) véhicule(s) sans pilote 2 ; ces relais de communication sans fil 41 pouvant être de type cellulaire. Ces relais de communication sans fil 41 font partie d'une infrastructure de communication sans fil existante.

Cette infrastructure de communication sans fil met en œuvre un réseau de relais de communication sans fil 41 fixes dont la densité détermine le nombre de connexions simultanées admissibles par le réseau de télécommunication 4.

Ces relais de communication sans fil 41 peuvent exploiter la transmission d'information par ondes radios dans le cas des réseaux LTE, WiMAX ou WiFi. Ces relais de communication sans fil 41 peuvent exploiter la transmission d'information par d'autres moyens de transmission tels que les ondes lumineuses dans le cas d'un réseau LiFi.

La liaison entre un relais de communication sans fil 41 et un véhicule sans pilote 2 est réalisée par la mise en œuvre d'un dispositif de télécommunication 25 intégré au véhicule sans pilote 2 et approprié à chaque type de réseau de télécommunication 4.

Pour établir la communication entre le poste de conduite à distance 3 connecté à distance au véhicule sans pilote 2, ces derniers sont équipés de moyens de communication 25, 35 respectifs propres à assurer la communication sans fil via le réseau de communication, en l'occurrence :
- le véhicule sans pilote 2 comprend un dispositif de télécommunication 25 prévu pour établir une communication sans fil avec les relais de communication sans fil 41 et donc pour établir une communication à distance avec le poste de conduite à distance 3 ;
- le poste de conduite à distance 3 comprend un dispositif de communication 35 prévu pour établir une connexion avec la plateforme de service de téléprésence 40 et donc pour établir une communication à distance avec le véhicule sans pilote 2 via le réseau de télécommunication 4.

Le dispositif de communication 35 forme ainsi une interface de connexion pour établir une connexion entre le poste de conduite à distance 3 et le réseau de télécommunication 4. De préférence, ce dispositif de communication 35 sera de type fibre optique afin d'optimiser la bande passante et la latence, mais il est possible de mettre en œuvre d'autres type de liaison tels que des liaisons filaire, par exemple liaison ADSL ou liaison par fil de cuivre, ou des liaisons sans fil, par exemple une connexion radio de type LTE ou WiMAX, entre le poste de conduite à distance 3 et le réseau de télécommunication 4. Il appartiendra alors à la plateforme de service de téléprésence 40 de déterminer si la qualité de transmission est suffisamment bonne pour établir la communication entre le véhicule sans pilote 2 et le poste de conduite à distance 3.

Le dispositif de télécommunication 25 forme donc une interface de connexion sans fil avec les relais de communication sans fil 41 de l'infrastructure de communication sans fil. Ce dispositif de télécommunication 25 doit être compatible avec le type d'infrastructure choisie. Elle peut aussi avoir une compatibilité avec plusieurs types d'infrastructures différentes afin de diversifier les modes de connexion et réaliser une redondance de communication.

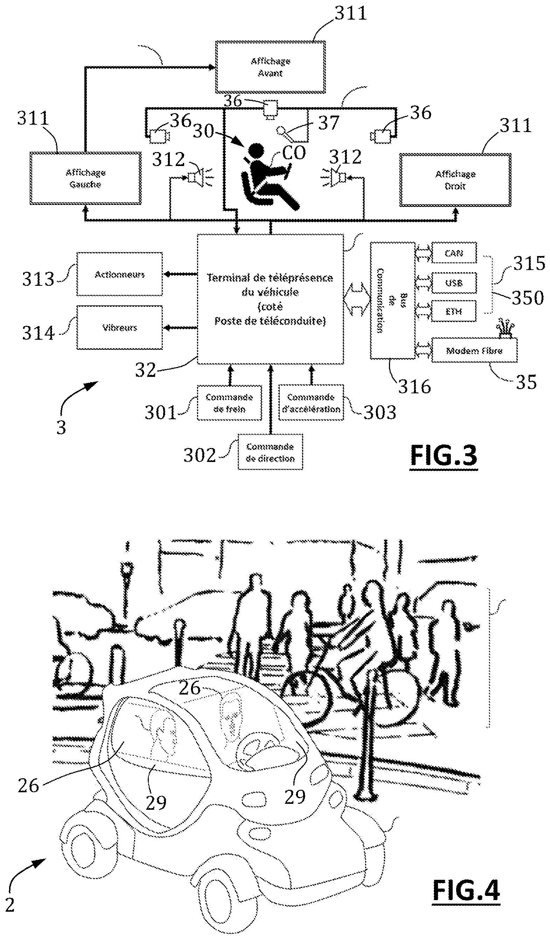

Le véhicule sans pilote 2 comprend une caisse (ou carrosserie) recevant les organes classiques de liaison au sol (roues, suspension, ...) et de motorisation (électrique, thermique, gaz ou hybride). Ce véhicule sans pilote 2 appartient à la catégorie des Véhicules Terrestres Motorisés, et il est par exemple formé d'un quadricycle électrique qui est un véhicule très adapté à la circulation en ville et qui présente un grand nombre d'atouts pour être téléopéré. Cependant, il est possible de mettre en œuvre la présente invention dans tout véhicule de la catégorie des Véhicules Terrestres Motorisés. Par ailleurs, ce véhicule sans pilote 2 présente des vitrages avant, de droite et de gauche 29, comme visible sur la Figure 4.

Comme visible sur la Figure 1, un deuxième véhicule sans pilote 2 est représenté pour illustrer le fait qu'un conducteur CO peut séquentiellement conduire n'importe quel véhicule sans pilote 2 avec un même poste de conduite à distance 3. En effet, le conducteur CO ne peut pas conduire simultanément plusieurs véhicules sans pilote 2, mais il lui suffit de stationner le véhicule sans pilote 2 en cours d'utilisation pour prendre les commandes d'un autre véhicule sans pilote 2, ces deux véhicules sans pilote 2 pouvant par exemple être très éloignés l'un de l'autre.

Par ailleurs, ce véhicule sans pilote 2 comprend des dispositifs de commande pour commander un déplacement du véhicule sans pilote 2, avec au moins :
- un dispositif de commande de freinage 201,
- un dispositif de commande de direction 202, et
- un dispositif de commande d'accélération 203.

Ces dispositifs de commande 201, 202, 203 peuvent être mécaniques en agissant directement sur les éléments de commande manuelle, tels qu'un volant de direction, une pédale d'accélération et une pédale de frein. Ces dispositifs de commande 201, 202, 203 peuvent aussi être électroniques en agissant directement ou indirectement sur des actionneurs prévus à cet effet sur le véhicule sans pilote 2.

Le véhicule sans pilote 2 comprend aussi plusieurs capteurs de véhicule couplés au véhicule sans pilote 2, dont au moins :
- un capteur optique 211 pour une captation de signaux analogiques optiques de l'environnement dans lequel évolue le véhicule sans pilote 2 ;
- un capteur acoustique 212 pour une captation de signaux analogiques acoustiques de l'environnement dans lequel évolue le véhicule sans pilote 2,
- un capteur de mouvement 213, 214 pour une captation de mouvements au sein du véhicule sans pilote 2 à un emplacement de conduite, et
- un capteur d'état 215 pour une captation d'une information d'état relative au véhicule sans pilote 2.

Le capteur optique 211 forme ainsi un moyen de captation de signaux optiques. Avantageusement, le véhicule sans pilote 2 comprend trois capteurs optiques 211 réalisés sous la forme de caméras, avec une caméra 211 orientée vers l'avant et deux autres caméras 211 orientées vers la droite et la gauche. Il est aussi envisageable d'avoir une quatrième caméra orientée vers l'arrière.

Le capteur acoustique 212 forme ainsi un moyen de captation de signaux acoustiques. Avantageusement, le véhicule sans pilote 2 comprend deux capteurs acoustiques 212 réalisés sous la forme de microphones, avec un microphone 212 positionné à droite et un autre microphone 212 positionnée à gauche du véhicule.

Ce(s) capteur(s) optique(s) 211 et ce(s) capteur(s) acoustique(s) 212 sont destinés à la reproduction dans le poste de conduite à distance 3 du champ de vision et de l'ambiance sonore captés dans l'environnement du véhicule sans pilote 2. Il est à noter que ces capteurs 211, 212 peuvent mettre en œuvre un nombre et une disposition différents de moyens de captation des signaux analogiques optiques et acoustiques au sein ou autour du véhicule.

Le(s) capteur(s) de mouvement 213, 214 forment ainsi des moyens de captation de signaux haptiques. Avantageusement, les capteurs de mouvement comprennent au moins une centrale inertielle 213 mesurant les mouvements de roulis, de tangage et de lacet du véhicule sans pilote 2 emplacement de conduite, c'est-à-dire une ou plusieurs centrales inertielles qui sont placées de sorte à mesurer le roulis, le tangage et le lacet au niveau de cet emplacement de conduite.

Par ailleurs, les capteurs de mouvement peuvent comprendre des accéléromètres 214 mesurant les vibrations au niveau des dispositifs de commande 201, 202, 203 à cet emplacement de conduite, et notamment plusieurs accéléromètres de contact qui sont disposés à cet emplacement de conduite pour mesurer des vibrations par exemple sur la colonne de direction et sur l'emplacement des pédales d'accélération et de frein.

Le(s) capteur(s) d'état 215 se présentent sous la forme d'une ou plusieurs interfaces sur un ou plusieurs bus de communication 216 mis en œuvre dans le véhicule sans pilote 2. Autrement dit, la captation de la ou des informations d'état s'effectue par une acquisition de signaux numériques du ou des bus de communication 216 du véhicule sans pilote 2. Le ou chaque bus de communication 216 est adapté aux contraintes spécifiques du véhicule sans pilote 2, classiquement nommé bus de « terrain » tels que CAN, LIN, FLEXRAY ou MOST. Cependant, il est possible d'interfacer avec d'autres bus présents dans le véhicule sans pilote 2, et notamment des bus « informatiques » tels qu'Ethernet ou USB.

Ainsi, à l'aide des bus de communication 216 du véhicule sans pilote 2, le véhicule sans pilote 2 récupère et fournit des informations d'état nécessaires à sa bonne utilisation. Les informations d'état concernent notamment le niveau de fuel ou d'essence pour une motorisation thermique ou hybride, le niveau de charge de la batterie électrique pour une motorisation électrique ou hybride, de manière générale la quantité d'énergie restante, la vitesse de déplacement, l'état des feux et clignotants, l'état de la boite de vitesse (Avant, Neutre, Arrière), les indications d'arrêt d'urgence pour raison technique, les informations relatives à des incidents, des défauts techniques et des pannes, le niveau d'huile, la pression des pneumatiques,...

Le véhicule sans pilote 2 comprend en outre un terminal de téléprésence du conducteur 22 relié aux dispositifs de commande 201, 202, 203 pour les commander en fonction de signaux de conduite à distance SCD provenant du poste de conduite à distance 3.

Ce terminal de téléprésence du conducteur 22 forme une unité de traitement pour l'exécution de l'application cliente de téléprésence, autrement dit pour un pilotage à distance du véhicule par un conducteur CO présent dans le poste de conduite à distance 3. En d'autres termes, ce terminal de téléprésence du conducteur 22 est concrétisé par une application « cliente » de téléprésence exécutée par une unité de traitement embarquée dans le véhicule sans pilote 2.

Comme visible sur la Figure 2, le terminal de téléprésence du conducteur 22 occupe une place centrale, dans la mesure où tous les autres éléments (décrits ci-avant ou ci-après) y sont connectés directement ou par l'intermédiaire d'un ou plusieurs bus de communication 216.

Le terminal de téléprésence du conducteur 22 est ainsi relié aux capteurs de véhicule sans pilote 211, 212, 213, 214, 215 pour recevoir leurs signaux de captation SCV, et au dispositif de télécommunication 25 pour recevoir les signaux de conduite à distance SCD et adresser ces signaux de captation SCV.

Le terminal de téléprésence du conducteur 22 de la Figure 1 est représenté comme disposé à l'intérieur du véhicule sans pilote 2, mais cette représentation ne détermine pas son emplacement. De plus, cette représentation du terminal de téléprésence du conducteur 22 ne signifie pas qu'il y a une dissociation nécessaire entre ce terminal de téléprésence du conducteur 22 et les autres unités de traitement présentes à bord du véhicule. Il est donc possible qu'une seule et unique unité de traitement soit utilisée à bord du véhicule pour assurer l'exécution de toutes les applications requises pour son fonctionnement. Le terminal de téléprésence du conducteur 22 est relié aux différents dispositifs présents à bord du véhicule.

Le véhicule sans pilote 2 comprend une unité de conduite autonome ou assistée 23 reliée aux dispositifs de commande 201, 202, 203 et reliée au terminal de téléprésence du conducteur 22, pour une commande exclusive des dispositifs de commande 201, 202, 203 :
- soit par l'unité de conduite autonome ou assistée 23, et le pilotage est donc dans un mode de pilotage autonome ou assistée sans considération des commandes effectués par le conducteur CO présent dans le poste de conduite à distance 3 ;
- soit par le terminal de téléprésence du conducteur 22, et le pilotage est donc dans un mode de pilotage à distance opéré par le conducteur CO présent dans le poste de conduite à distance 3.

Cette sélection du mode de pilotage se fait en fonction d'une comparaison entre des paramètres de conduite mesurés en temps réel et des seuils de sécurité associés (comme décrit ultérieurement), afin de déterminer lequel du terminal de téléprésence du conducteur 22 ou de l'unité de conduite autonome ou assistée 23 obtient l'exclusivité d'accès aux dispositifs de commande 201, 202, 203.

L'unité de conduite autonome ou assistée 23 est reliée au terminal de téléprésence du conducteur 22 par l'intermédiaire d'un bus de communication 216.

Le terminal de téléprésence du conducteur 22 est relié aux bus de communication 216 du véhicule sans pilote 2, permettant ainsi au conducteur CO distant de commander à distance, via des commandes secondaires spécifiques prévues dans le poste de conduite à distance 3, un certain nombre de dispositifs secondaires du véhicule sans pilote 2 tels que par exemple la commande des feux, la commande des clignotants, la commande des essuies glace, la commande du klaxon, ...

La commande de ces dispositifs techniques secondaires se fera par une génération de signaux numériques de commande sur le(s) bus de communication 216 du véhicule sans pilote 2, en fonction de signaux provenant du ou des capteurs d'état 350 du poste de conduite à distance 3 du fait d'une action du conducteur CO sur la ou les commandes secondaires.

Par contre, les trois dispositifs de commande 201, 202, 203 précités seront de préférence pris en charge de manière spécifique afin de réduire au maximum les risques d'erreur et de retard des commandes transmises par le conducteur CO, ou le cas échéant par l'unité de conduite autonome ou assistée 23.

Le poste de conduite à distance 3 comprend un poste d'accueil 30 pour accueillir le conducteur CO, avec notamment un siège et une cabine. Ainsi, ce poste d'accueil 30 reproduit l'habitacle du véhicule sans pilote 2. Ce poste d'accueil 30 peut être fixé à un châssis rattaché au sol par l'intermédiaire de plusieurs mécanismes mobiles ou actionneurs 313 décrits plus loin. A bord de ce poste d'accueil 30, le conducteur CO prend place comme s'il se trouvait à bord du véhicule sans pilote 2. L'ergonomie dans le poste d'accueil 30 est comparable à celle que pourrait constater le même conducteur s'il se trouvait à bord du véhicule sans pilote 2.

Ce poste de conduite à distance 3 comprend aussi des dispositifs de pilotage sur lesquels peut agir le conducteur CO pour produire des signaux de commande à distance SCD et comprenant au moins :
- un dispositif de pilotage de freinage 301,
- un dispositif de pilotage de direction 302 et
- un dispositif de pilotage d'accélération 303.

Ces dispositifs de pilotage 301, 302, 303 sont au contact direct du conducteur CO, et elles permettent au conducteur CO d'opérer naturellement et à distance avec le véhicule sans pilote 2, dans la mesure où le terminal de téléprésence du conducteur 22 réceptionnera les signaux de commande à distance SCD issus de ces dispositifs de pilotage 301, 302, 303 pour les traduire en commande sur les dispositifs de commande 201, 202, 203 et ainsi piloter le véhicule sans pilote 2. Le dispositif de pilotage de direction 302 peut se présenter sous la forme d'un volant de direction, le dispositif de pilotage de freinage 301 sous la forme d'une pédale de frein et le dispositif de pilotage d'accélération 303 sous la forme d'une pédale d'accélération.

Le poste de conduite à distance 3 comprend des émetteurs de téléconduite dont au moins :
- un émetteur optique 311 pour reproduire les signaux analogiques optiques captés par le(s) capteur(s) optique(s) 211 du véhicule sans pilote 2,
- un émetteur acoustique 312 pour reproduire les signaux analogiques acoustiques captés par le(s) capteur(s) acoustique(s) 212 du véhicule sans pilote 2,
- un émetteur de mouvement 313, 314 pour reproduire les mouvements captés par le(s) capteur(s) de mouvement 213, 214 du véhicule sans pilote 2, et
- au moins un émetteur d'état 315 pour informer le conducteur CO de l'information d'état capté par le(s) capteur(s) d'état 215 du véhicule sans pilote 2.

L'émetteur optique 311 forme ainsi un moyen de reproduction de signaux analogiques optiques, et il est utilisé pour la reproduction de signaux analogiques optiques captés depuis le véhicule sans pilote 2. Avantageusement, le poste de conduite à distance 3 comprend trois émetteurs optiques 311 réalisés sous la forme de systèmes d'affichage (par exemple du type écran), avec un système d'affichage 311 disposé à l'avant du conducteur CO, et deux autres systèmes d'affichage 311 disposés à droite et à gauche du conducteur CO. Cette représentation est destinée à mettre en évidence la relation entre la captation des signaux analogiques optiques au moyen des trois caméras 211 précédemment décrites, et une reproduction visuelle à l'échelle 1:1 de l'environnement extérieur vu au travers des vitrages avant, droit et gauche du véhicule sans pilote 2. Cependant, le poste de conduite à distance 3 peut mettre en œuvre un nombre et une disposition différents d'émetteur optiques 311 pour la reproduction des signaux analogiques optiques, ainsi l'émetteur optique 311 peut se présenter sous la forme d'un système d'affichage permettant au conducteur CO d'avoir un champ de vision similaire à celui qu'il aurait à bord du véhicule sans pilote 2.

L'émetteur acoustique 312 forme ainsi un moyen de reproduction de signaux analogiques acoustiques et il est utilisé pour la reproduction de signaux analogiques acoustiques captés depuis le véhicule sans pilote 2, et donc pour reproduire l'ambiance sonore captée à bord du véhicule sans pilote 2. Avantageusement, le poste de conduite à distance 3 comprend deux émetteurs acoustiques 312 réalisés sous la forme d'enceintes ou haut-parleurs disposés à droite et à gauche du conducteur CO. Cette représentation est destinée à mettre en évidence la relation entre la captation des signaux analogiques acoustiques au moyen des deux microphones 212 précédemment décrits. Cependant, le poste de conduite à distance 3 peut mettre en œuvre un nombre et une disposition différents d'émetteur acoustiques 312 pour la reproduction des signaux analogiques acoustiques.

Le(s) émetteur(s) de mouvement 313, 314 forment ainsi des moyens de reproduction de signaux haptiques. Avantageusement, les émetteurs de mouvement comprennent au moins un actionneur 313, et éventuellement plusieurs actionneurs 313, pour reproduire les mouvements de roulis, de tangage et de lacet dans le poste d'accueil 30 du poste de conduite à distance 3, autrement dit pour reproduire les mouvements de roulis, de tangage et de lacet captés par la ou les centrales inertielles 213 présentes dans le véhicule sans pilote 2. Le ou les actionneurs 313 peuvent être mécaniques de type hydraulique ou électromécanique et ils sont fixés sur le poste d'accueil 30 du poste de conduite à distance 3. Ainsi, il peut être prévu plusieurs actionneurs linéaires de type vérin ou servomoteur agissant sur le poste d'accueil 30 pour reproduire les inclinaisons du véhicule sans pilote 2 ainsi que les chocs ou vibrations transmis notamment par les roues.

Par ailleurs, les émetteurs de mouvement peuvent comprendre des vibreurs 314 pour reproduire les vibrations dans les dispositifs de pilotage 301, 302, 303 correspondants du poste de conduite à distance 3, autrement dit pour reproduire les vibrations captées par les accéléromètres 214 sur les dispositifs de commande 201, 202, 203 du véhicule sans pilote 2. Ces vibreurs 314 sont notamment placés dans le poste d'accueil 30 de manière à reproduire les vibrations de contact sur le volant et les pédales d'accélération et de frein formant les dispositifs de pilotage 301, 302, 303.

Le(s) émetteur(s) d'état 315 se présentent sous la forme d'une ou plusieurs interfaces sur un ou plusieurs bus de communication 316 mis en œuvre dans le poste de conduite à distance 3. Le poste de conduite à distance 3 étant prévu pour être à un emplacement fixe, les bus de communication 316 communément utilisés sont des bus « informatiques » tels qu'Ethernet ou USB. Cependant, il est possible d'interfacer avec d'autres types de bus comme les bus de « terrain » tels que CAN, LIN, FLEXRAY ou MOST.

Le poste de conduite à distance 3 comprend un terminal de téléprésence du véhicule 32 relié aux dispositifs de pilotage 301, 302, 303 pour recevoir les signaux de conduite à distance SCD, ce terminal de téléprésence du conducteur 32 étant également relié au dispositif de communication 35 afin de recevoir les signaux de captation SCV issus des capteurs de véhicule sans pilote 211, 212, 213, 214, 215, et d'émettre les signaux de conduite à distance SCD qui serviront à piloter le véhicule sans pilote 2.

A titre d'exemple, le terminal de téléprésence du véhicule 32 est relié à un ensemble de capteurs placés sur les dispositifs de pilotage 301, 302, 303, et les mesures de ces capteurs sont traduites en signaux de conduite à distance SCD, qui sont transmis puis reproduit par les dispositifs de commande 201, 202, 203 correspondants du véhicule sans pilote 2.

Le terminal de téléprésence du véhicule 32 est également relié aux émetteurs de téléconduite 311, 312, 313, 314, 315 pour les commander en fonction des signaux de captation SCV issus des capteurs de véhicule sans pilote 211, 212, 213, 214, 215.

Le terminal de téléprésence du véhicule 32 forme ainsi une unité de traitement en charge de l'exécution de l'application cliente de téléprésence du côté du poste de conduite à distance 3. Le terminal de téléprésence du véhicule 32 peut ainsi être concrétisé par une application « cliente » de téléprésence exécutée par une unité de traitement.

Ce terminal de téléprésence du véhicule 32 est relié au terminal de téléprésence du conducteur 22 au travers des différentes parties du réseau de télécommunication 4. Les échanges de données entre ces terminaux 22, 32 permettent d'établir et d'assurer l'expérience de téléprésence entre le conducteur CO et le véhicule sans pilote 2.

Par ailleurs, le poste de conduite à distance 3 comprend des capteurs de poste de conduite à distance 36, 37, 350 dont au moins un capteur optique 36 et un capteur acoustique 37 pour une captation de signaux analogiques optiques et acoustiques en provenance du poste d'accueil 30 accueillant le conducteur CO, ainsi qu'au moins un capteur d'état 350 pour une captation d'une information d'état relative à une action du conducteur CO sur une commande secondaire prévue dans le poste de conduite à distance 3.

Le capteur optique 36 forme ainsi un moyen de captation de signaux optiques. Avantageusement, le poste de conduite à distance 3 comprend trois capteurs optiques 36 réalisés sous la forme de caméras tournés vers le conducteur CO, avec une caméra avant 36 tournée vers la face avant du conducteur CO et deux autres caméras 36 orientées vers les profils de droite et de gauche du conducteur CO.

Le capteur acoustique 37 forme ainsi un moyen de captation de signaux acoustiques. Avantageusement, le poste de conduite à distance 3 comprend un capteur acoustique 37 réalisé sous la forme d'un microphone positionné devant le conducteur CO pour capter sa voix.

Cependant, le(s) capteur(s) optique(s) et le capteur(s) acoustique(s) 37 peuvent mettre en œuvre un nombre et une disposition différents de moyens de captation des signaux analogiques optiques et acoustiques au sein du poste de conduite à distance 3.

Le(s) capteur(s) d'état 350 se présentent sous la forme d'une ou plusieurs interfaces sur un ou plusieurs bus de communication 316 mis en œuvre dans le poste de conduite à distance 3 en liaison avec une ou plusieurs commandes secondaires telles que par exemple la commande des feux, la commande des clignotants, la commande des essuies glace, la commande du klaxon, .... Autrement dit, la captation de la ou des informations d'état sur ces commandes secondaires s'effectue par une acquisition de signaux numériques du ou des bus de communication 316 du poste de conduite à distance 3. Le ou chaque bus de communication 316 est adapté aux contraintes spécifiques du véhicule sans pilote 2, classiquement nommé bus de « terrain » tels que CAN, LIN, FLEXRAY ou MOST. Cependant, il est possible d'interfacer avec d'autres bus présents dans le poste de conduite à distance 3, et notamment des bus « informatiques » tels qu'Ethernet ou USB.

Le terminal de téléprésence du véhicule 32 est relié à ces capteurs de poste de conduite à distance 36, 37, 350 pour recevoir leurs signaux de captation SCP et pour les communiquer au terminal de téléprésence du conducteur 22 présent dans le véhicule sans pilote 2 via les dispositifs de télécommunication 25, 35 et le réseau de télécommunication 4.

Le véhicule sans pilote 2 comprend quant à lui des émetteurs de véhicule sans pilote 26, 27 dont au moins :
- un émetteur optique 26 pour reproduire les signaux analogiques optiques captés par le(s) capteur(s) optique(s) 36 du poste de conduite à distance 3 ; et
- au moins un émetteur acoustique 27 pour reproduire les signaux analogiques acoustiques captés par le(s) capteur(s) acoustique(s) (37) du poste de conduite à distance 3.

Le terminal de téléprésence du conducteur 22 est relié aux émetteurs de véhicule sans pilote 26, 27 pour les commander en fonction des signaux de captation SCP des capteurs de poste de conduite à distance 36, 37, 350 pour établir une relation entre la captation des signaux analogiques optiques et acoustiques par les capteurs de poste de conduite à distance 36, 37, 350 dans le poste de conduite à distance 3, avec la reproduction de la présence visuelle et sonore du conducteur dans le véhicule sans pilote 2 grâce aux émetteurs de véhicule sans pilote 26, 27.

Ces émetteurs de véhicule sans pilote 26, 27 forment ainsi des moyens de reproduction des signaux analogiques optiques et acoustiques captés par les capteurs de poste de conduite à distance 36, 37, 350. Ces émetteurs de véhicule sans pilote 26, 27 sont utilisés pour la reproduction de la présence visuelle et sonore du conducteur CO à l'intérieur du véhicule sans pilote 2.

L'émetteur optique 26 forme ainsi un moyen de reproduction de signaux analogiques optiques, et il est utilisé pour la reproduction de signaux analogiques optiques captés depuis le poste de conduite à distance 3 et tournés vers le conducteur CO. Avantageusement, le véhicule sans pilote 2 comprend trois émetteurs optiques 26 réalisés sous la forme de systèmes d'affichage (par exemple des écrans) disposés à l'intérieur du véhicule sans pilote 2 de sorte à être visible de l'extérieur via les vitrages 29 avant, droite et gauche, avec :
- un système d'affichage avant 26 placé en face du vitrage avant 29 et reproduisant les signaux analogiques optiques captés par la caméra avant 36 tournée vers la face avant du conducteur CO ; et
- un système d'affichage de droite 26 placé en face du vitrage de droite 29 et un système d'affichage de gauche placé en face du vitrage de gauche 29, et reproduisant les signaux analogiques optiques captés respectivement par les deux autres caméras 36 orientées vers les profils de droite et de gauche du conducteur CO.

Cette représentation est destinée à mettre en évidence la relation entre la captation des signaux analogiques optiques au moyen des trois caméras 36 précédemment décrites, et une reproduction visuelle (par exemple à l'échelle 1:1) au moyen des systèmes d'affichage 26 du conducteur ainsi visible de l'extérieur du véhicule sans pilote 2 au travers des vitrages 29, bien que distant. Cependant, le véhicule sans pilote 2 peut mettre en œuvre un nombre et une disposition différents d'émetteurs optiques 26 pour la reproduction des signaux analogiques optiques, ainsi l'émetteur optique 26 peut se présenter par exemple en variante sous la forme d'un système d'affichage holographique propre à générer une image holographique (ou tridimensionnelle) du conducteur dans le véhicule sans pilote 2.

L'émetteur acoustique 27 forme ainsi un moyen de reproduction de signaux analogiques acoustiques et il est utilisé pour la reproduction de signaux analogiques acoustiques captés à l'intérieur du poste d'accueil 30 du poste de conduite à distance 3, et donc pour reproduire la voix du conducteur CO captée à bord du poste d'accueil 30. Avantageusement, le véhicule sans pilote 2 comprend deux émetteurs acoustiques 27 réalisés sous la forme d'enceintes ou haut-parleurs disposés à droite et à gauche du véhicule sans pilote 2. Ces émetteurs acoustiques 27 se trouvent à l'intérieur ou à l'extérieur du véhicule sans pilote 2, du moment que les signaux acoustiques sont audibles à des personnes qui seraient autour du véhicule sans pilote 2 ou à proximité du véhicule sans pilote 2. Cependant, le véhicule sans pilote 2 peut mettre en œuvre un nombre et une disposition différents d'émetteur acoustiques 27 pour la reproduction des signaux analogiques acoustiques.

Le système de conduite à distance 1 selon l'invention permet ainsi au conducteur CO de se trouver physiquement en un lieu donné, à savoir à l'intérieur du poste de conduite à distance 3, et d'agir sur le véhicule sans pilote 2 se trouvant à un autre endroit sans éprouver de gêne significative. Il en va de même pour les personnes se trouvant à proximité du véhicule sans pilote 2, car elles peuvent interagir avec le conducteur CO du véhicule sans pilote 2, tant visuellement que vocalement, bien que ce dernier se trouve à un autre endroit et ceci sans non plus ressentir de gêne.

En référence à la Figure 1, le système de conduite à distance 1 trouve une application avantageuse avec un véhicule sans pilote 2 de type véhicule de livraison de biens et de marchandises 5, comme par exemple des colis postaux, des produits frais, des produits sensibles, des lettres,.... Pour ce faire, le véhicule sans pilote 2 présente un compartiment intérieur 28 pour le stockage de biens et de marchandises 5.

De manière avantageuse, ce compartiment intérieur 28 sert de support pour le(s) émetteur(s) optique(s) 26 du véhicule sans pilote 2, et notamment pour les systèmes d'affichage 26 placés devant les vitrages 29.

Ce système de conduite à distance 1 est dont adapté pour optimiser la logistique du « dernier kilomètre », le véhicule sans pilote 2 étant amené à évoluer dans des lieux occupés par des piétons ainsi que des conducteurs d'autres véhicules tels que des voitures, scooters ou vélos. Dans ce contexte, l'invention permet d'assurer une interaction naturelle et bidirectionnelle entre les parties prenantes (conducteur distant et autres personnes proches du véhicule) afin de faciliter les échanges et garantir une continuité des usages généralement pratiqués entre les conducteurs de véhicules ou bien entre un véhicule et les piétons.

Autrement dit, la mise en œuvre de l'invention permet au conducteur CO distant ainsi qu'aux personnes à proximité du véhicule sans pilote 2 de :
- identifier les personnes (conducteur, piéton, cycliste...) ;
- savoir où se porte leurs attentions ;
- présager de leurs intentions ;
- avoir des interactions sociales, tels que des échanges verbaux (formules de politesse, avertissements, questions, réponses, ...) et des échanges visuels (sourire, regard, ...).

En outre, avec la mise en œuvre de la présente invention, le conducteur CO ne se trouve donc plus physiquement à bord du véhicule sans pilote 2. Par conséquent, un certain nombre d'équipements normalement prévus pour accueillir le conducteur CO à bord du véhicule sans pilote 2 ne sont plus requis, comme par exemple les sièges, ceintures de sécurité, airbags, équipements multimédias, ventilation, chauffage, ... Le retrait de ces équipements libère un volume et un poids qui se trouvent alors utilisables pour d'autres applications, et en particulier pour la mise en place du compartiment intérieur 28.

Ainsi, dans le domaine de la logistique du « dernier kilomètre », ce volume et ce poids sont mis au profit du transport de biens et de marchandises. L'emplacement du conducteur ainsi libéré donne place à l'aménagement d'un compartiment intérieur 28 pour le stockage et le maintien de biens et de marchandises. Autrement dit, ce compartiment intérieur 28 forme un moyen de maintien adapté aux biens et marchandises transportés.

Le compartiment intérieur 28 peut être spécifique en fonction du type des biens ou des marchandises qu'il a vocation à transporter. Ainsi, ce compartiment intérieur 28 peut prendre la forme d'une armoire à colis pour les lettres et colis postaux, d'un bloc réfrigéré pour les produits frais, d'un coffre sécurisé pour les produits dangereux, ...

Dans le cas où le véhicule sans pilote 2 dispose de places supplémentaires à côté de la place normalement prévue pour le conducteur, ce compartiment intérieur 28 peut être étendu pour occuper tout le volume utile, ce qui augmente la capacité de stockage de biens et de marchandises transportés.

Afin de concilier la fonction de stockage et la fonction de support pour le(s) émetteur(s) optique(s) 26, il est possible que le(s) émetteur(s) optique(s) 26 soit divisés en autant de parties qu'il y a d'emplacements de stockage individualisé ; par exemple, dans le cas d'une armoire à colis, le(s) émetteur(s) optique(s) 26 peuvent être divisés en autant de systèmes d'affichage qu'il y a de compartiments.

Le système de conduite à distance 1 fonctionne sur des modes de gestion et de transmission de données établis par les standards de téléprésence existants tels que H323, SIP, XMPP ou encore WebRTC. Ceux-ci ont en commun de se baser sur le protocole de communication du réseau Internet, appelé IP pour Internet Protocol. Chacun de ces standards traite la téléprésence en deux parties distinctes :
- une partie de gestion traitée au moyen d'un outil de gestion 9, et
- une partie de transmission bidirectionnelle des données entre le véhicule sans pilote 2 et le poste de conduite à distance 3 traitée au moyen d'un outil de transmission 6.

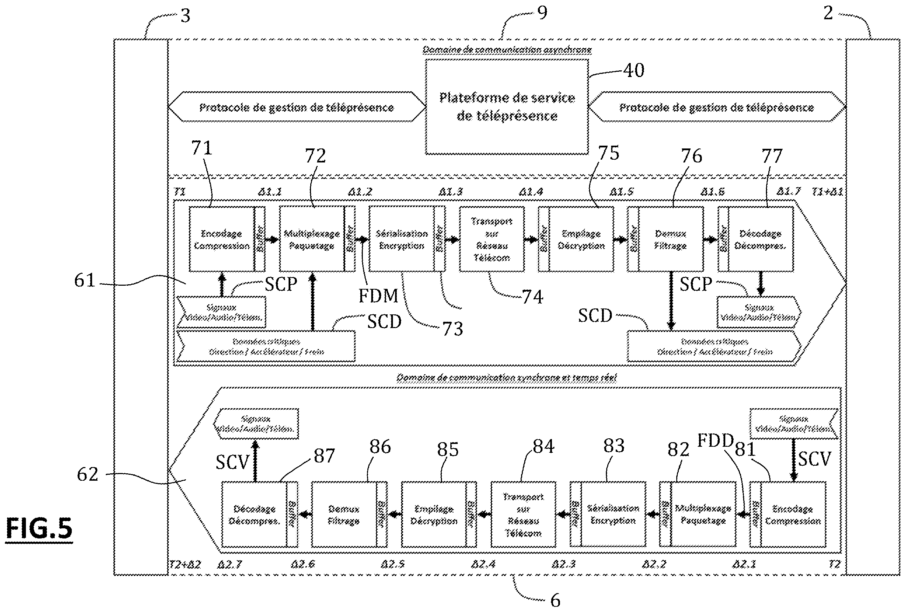

Comme expliqué précédemment, la plateforme de service de téléprésence 40 est en charge de mettre en relation, de manière bidirectionnelle, un véhicule sans pilote 2 avec un poste de conduite à distance 3. Pour ce faire, la plateforme de service de téléprésence 40 intègre l'outil de gestion 9 schématiquement illustré sur la Figure 5.

Cet outil de gestion 9, à la charge de la plateforme de service de téléprésence 40, référence l'ensemble des terminaux de téléprésence 22, 32, appelés « clients de téléprésence ». L'outil de gestion 9 de la plateforme de service de téléprésence 40 est sollicitée par plusieurs terminaux de téléprésence 22, 32 afin de les mettre en relation par l'établissement d'un canal de communication.

Selon les standards, ce canal de communication est indirect, c'est-à-dire que les données échangées passent par l'intermédiaire d'un serveur de données (aussi appelé « PROXY »). D'autres standards préfèrent établir un canal de communication direct et utilisent des capacités de configuration du réseau de télécommunication, aussi appelé « routage », pour établir une communication performante entre les terminaux de téléprésence 22, 32.

L'outil de gestion 9 met en œuvre un protocole de communication souvent complexe qui gère l'ensemble des contraintes du système. Les échanges de données propres à ce protocole ne requièrent pas d'être réalisés dans un délais spécifique. Par conséquent, ces protocoles de gestion s'effectuent dans un domaine de communication dit « asynchrone », ceci signifie qu'il ne prend pas en compte la synchronicité des échanges ni les délais de transmission des données échangées.

Autrement dit, cet outil de gestion 9 met en œuvre des chaines de transmission des données entre le véhicule sans pilote 2 et le poste de conduite à distance 3, au moyen d'une gestion centralisée qui met par exemple en œuvre un protocole de gestion standard tel que ceux décrit dans les normes H323, SIP, XMPP ou encore WebRTC.

La gestion entre la plateforme de service de téléprésence 40, le véhicule sans pilote 2 et le poste de conduite à distance 3 est donc réalisée dans un mode asynchrone, avec des échanges de données qui s'effectuent de manière aléatoire. Ce mode de communication asynchrone ne prend pas en charge les délais de transmission si bien que le temps d'échange des données n'est pas déterministe. En conséquence, il est probable que les échanges de données effectués par l'outil de gestion 9 dans la plateforme de service de téléprésence 40 donnent lieu à des temps de réaction variables sans remettre en cause le bon fonctionnement de la plateforme de service de téléprésence 40.

L'outil de transmission 6 concerne l'ensemble des données échangées entre les terminaux de téléprésence 22, 32 (ou entre le véhicule sans pilote 2 et le poste de conduite à distance 3) et concerne en particulier les signaux de captation SCP, SCV et les signaux de conduite à distance SCD. La transmission de ces données est continue de part et d'autre du canal de communication ainsi établi par la plateforme de service de téléprésence 40. Dans ce cas, les échanges de données doivent s'effectuer de manière à maîtriser les temps de transmission d'une extrémité à l'autre du canal de communication. Différentes techniques peuvent être mises en œuvre pour atteindre ce résultat telles que : la transmission des données sur des bus de communication synchrones tels que les bus mémoire ou encore les bus USB ; la transmission sur des réseaux de diffusion de données longue distance tels que les réseaux de télévision numérique DVB-T ou DVB-S et l'utilisation du protocole MPEG-TS ; et enfin, la configuration du « routage » d'un réseau de télécommunication par la mise en œuvre d'un protocole approprié tels que les protocoles RTP et SRTP.

L'outil de transmission 6, comme illustré sur la Figure 5, définit un domaine d'échange des flux de données de téléprésence entre le poste de conduite à distance 3 et le véhicule sans pilote 2. Le mode de communication réalisé par cet outil de transmission 6 est synchrone et en temps réel, autrement dit les échanges de données s'effectuent de manière à maîtriser les temps de transmission d'un point à l'autre du canal de communication. Différentes techniques sont mises en œuvre pour atteindre ce résultat en fonction du contexte dans lequel s'effectue la transmission des données.

Tout d'abord, au sein d'un équipement, il est d'usage de réaliser un traitement de données par des unités de traitement spécialisées (module hardware spécialisé) ou de mettre en œuvre un système d'exécution d'application temps réel (Real Time Operating System). Par ailleurs, lors de la transmission sur les réseaux de télécommunication, il est d'usage d'utiliser des protocoles de transmissions dédiés à ces modes de communication tel que RTP/SRTP.

Sur la Figure 5, à l'intérieur de l'outil de transmission 6, sont représentés deux flux de données, à savoir un flux montant 61 qui part du poste de conduite à distance 3 pour être transmis au véhicule sans pilote 2, et un flux descendant 62 qui part du véhicule sans pilote 2 pour être transmis au poste de conduite à distance 3. Les deux flux 61, 62 sont sensiblement identiques à quelques détails près décrits plus loin. Chaque flux 61, 62 transmet de manière continue les données acquises à la source, respectivement le poste de conduite à distance 3 et le véhicule sans pilote 2, et les restitue lorsqu'elles arrivent à la destination, respectivement le véhicule sans pilote 2 et le poste de conduite à distance 3.

Le temps d'acquisition propre aux capteurs 211, 212, 213, 214, 215, 36, 37, 350 n'est pas indiqué dans ce diagramme car il est négligeable en regard des autres délais occasionnés par la transmission. De même, le temps de restitution propre aux émetteurs 311, 312, 313, 314, 315, 26, 27 n'est pas indiqué dans ce diagramme malgré l'impact qu'il peut occasionner sur le délai global de transmission des données.

Cette représentation en Figure 5 se concentre uniquement sur la chaine de transmission des flux de données entre, d'une part, les interfaces d'acquisition de données des capteurs et, d'autre part, la restitution de ces mêmes données aux interfaces des émetteurs à l'autre extrémité du canal de communication.

Pour chaque flux 61, 62, l'outil de transmission 6 divise la chaine de transmission en sept étapes réalisées par sept blocs de traitement 71 à 77 respectifs et 81 à 87 respectifs. Certains de ces blocs de traitement 71-77 et 81-87 sont accolés à un autre bloc « buffer » représentant des mémoires tampons, permettant au bloc de traitement correspondant de réaliser sa fonction.

Chaque bloc de traitement 71-77 et 81-87 ainsi que chaque bloc « buffer » occasionne un retard dans la transmission des données représenté par Δ1.1 -Δ1.7 pour le flux montant 61 et Δ2.1 -Δ2.7 pour le flux descendant 62. Ces retards se cumulent au fil des chaînes de transmission des flux 61, 62 pour atteindre des retards globaux en bout de chaine respectivement de T1+Δ1 et T2+Δ2.

Les retards globaux déterminent la performance du système de conduite à distance 1, ces retards visant à être les plus faibles possibles. Cette problématique de délai de transmission est solutionnée à la fois par un soin particulier apporté à la conception des blocs de traitement 71-77 et 81-87 et aussi à la mise en œuvre des protocoles appropriés pour la transmission des données sur le réseau de télécommunication 4.

La mise en œuvre de ces protocoles est réalisée par les standards de téléprésence tels que H323, SIP, XMPP ou encore WebRTC. Cependant, la seule maitrise du délai de transmission des données ne suffit pas à garantir une expérience de téléprésence suffisante pour permettre des opérations telles que la conduite à distance du véhicule sans pilote 2 par le conducteur CO.

En effet, les diverses étapes tout au long de la chaine de transmission peuvent subir des fluctuations dans leur temps de traitement. Ces fluctuations peuvent occasionner de légers retards de transmission d'une donnée par rapport à une autre. Ceci engendre une sensation perceptible et très gênante pour les utilisateurs. Par exemple, il n'est pas rare, lors d'une visioconférence, de constater un léger retard entre l'image et le son. Dans le cas de la conduite à distance mise en œuvre par l'invention, une gêne de ce type entre le champ de vision et l'inclinaison du poste d'accueil 30 du poste de conduite à distance 3 peut provoquer la perte totale de contrôle du véhicule sans pilote 2.

Afin de solutionner ce risque de désynchronisation entre les différentes sources de données, l'ensemble des données du véhicule sans pilote 2 pour le flux montant 61 et l'ensemble des données du poste de conduite à distance 3 pour le flux descendant 62, sont synchronisées puis multiplexées au sein d'un seul et unique flux de données montante FDM pour le flux montant 61 et d'un seul et unique flux de données descendante FDD pour le flux descendant 62.

Ainsi, l'outil de transmission 6 comprend, pour le flux montant 61, un premier bloc de traitement 71 mettant en œuvre un encodage et une compression des signaux de captation SCP issus des capteurs de poste de conduite à distance 36, 37, 350, suivi d'un deuxième bloc de traitement 72 mettant en œuvre une synchronisation et un multiplexage des signaux de conduite à distance SCD issus des dispositifs de pilotage 301, 302, 303 et des signaux de captation SCP encodés et compressés dans le premier bloc de traitement 71.

De même, l'outil de transmission 6 comprend, pour le flux descendant 62, un premier bloc de traitement 81 mettant en œuvre un encodage et une compression des signaux de captation SCV issus des capteurs de véhicule sans pilote 211, 212, 213, 214, 215, suivi d'un deuxième bloc de traitement 82 mettant en œuvre un multiplexage des signaux de captation SCV encodés et compressés dans le premier bloc de traitement 82.

De cette manière, les fluctuations de transmission de l'ensemble du système peuvent occasionner une légère variation du temps de retard global T1+Δ1 ou T2+Δ2, mais n'a aucune incidence sur la synchronisation de l'ensemble des données de sortie utilisées pour réaliser l'expérience de téléprésence requise par la conduite à distance.

Par ailleurs, et comme précédemment décrit pour le flux montant 61, dans un besoin de réduire au maximum le temps de transmission des signaux de conduite à distance SCD, le multiplexage des signaux de captation SCP et des signaux de conduite à distance SCD est réalisée dans le deuxième bloc de traitement 72 car ces signaux de conduite à distance SCD ne nécessitent pas d'être compressées.

Ensuite, l'outil de transmission 6 comprend, pour le flux montant 61 (respectivement le flux descendant 62) successivement :
- un troisième bloc de traitement 73 (respectivement 83) pour une sérialisation et un encryptage des données multiplexées dans le deuxième bloc de traitement 72 (respectivement 82), puis
- un quatrième bloc de traitement 74 (respectivement 84) pour une transmission des données sérialisées et encryptées dans le réseau de télécommunication 4 ; puis
- un cinquième bloc de traitement 75 (respectivement 85) pour un empilage et un décryptage des données en provenance du réseau de télécommunication 4;
- un sixième bloc de traitement 76 (respectivement 86) pour un démultiplexage et un filtrage des données en provenance du cinquième bloc de traitement 75 (respectivement 85) ;
- un septième bloc de traitement 77 (respectivement 87) pour un décodage et une décompression des données en provenance du sixième bloc de traitement 76 (respectivement 86).

En fin du flux montant 61, au niveau du véhicule sans pilote 2, les signaux de conduite à distance SCD sont récupérés en sortie du sixième bloc de traitement 76, tandis que les signaux de captation SCP sont récupérés en sortie du septième bloc de traitement 77. En effet, la restitution des signaux de conduite à distance SCD est réalisée après la sixième étape, avant la dernière étape de la chaine de transmission, puisque ces signaux de conduite à distance SCD n'ont pas à être décompressées ni décodées.

En fin de flux descendant 62, les signaux de captation SCV sont récupérés en sortie du septième bloc de traitement 87.

Par conséquent, le traitement spécifique des signaux de conduite à distance SCD permet une réduction du délai global du système de Δ1.1 et Δ1.7 dans le flux montant 61. Cette particularité n'apparait pas dans le flux descendant 62 car, dans ce cas, ces signaux de conduite à distance SCD (qui sont des signaux de commande) n'existent pas.

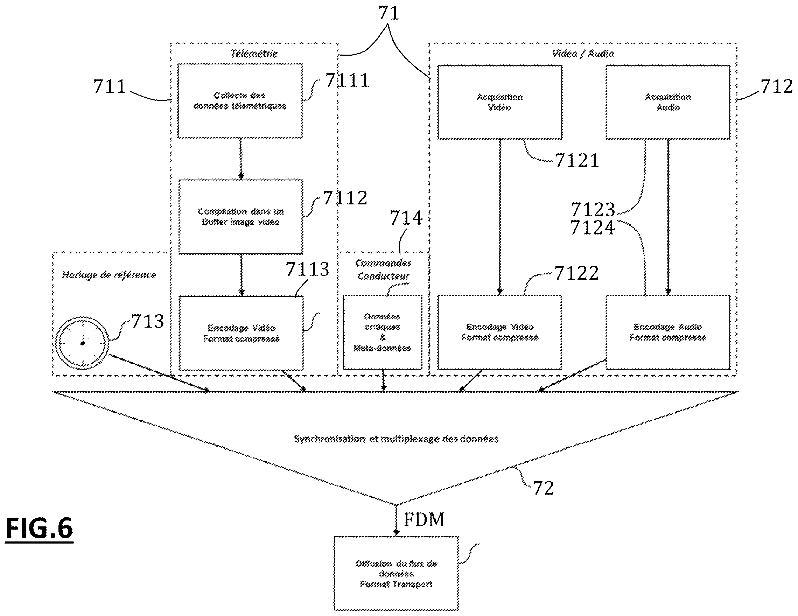

La Figure 6 est un schéma qui illustre les moyens mis en œuvre dans le premier bloc de traitement 71 et dans le deuxième bloc de traitement 72, afin d'assurer une synchronisation et un multiplexage des signaux de conduite à distance SCD et des signaux de captation SCP qui sont transmis sur le canal de communication dans le flux montant 61.

Les signaux de captation SCP comprennent :
- du ou des capteurs d'état 350, c'est-à-dire l'ensemble des données autres que vidéo et audio telles que les informations d'état (données acquises sur le(s) bus de communication 316) ;
- des données optiques (ou flux vidéo) qui sont issues du ou des capteurs optiques 36; et
- des données audio (ou flux audio) qui sont issues du ou des capteurs acoustiques 37.

Les standards de téléprésence tels que H323, SIP, XMPP ou WebRTC possèdent des mécanismes de transmission des flux vidéo et audio de plusieurs sources vers plusieurs destinations. Ces mécanismes standards assurent les étapes d'acquisition, d'encodage, de multiplexage et de sérialisation des flux vidéo et audio avant d'être transmises sur le réseau de télécommunication. De même, ces standards de téléprésence assurent les étapes inverses de désérialisation, de filtrage, de décodage et de restitution de ces mêmes données après réception depuis le réseau de télécommunication.

Chaque standard définit un format de multiplexage des données en lien avec la gestion de la transmission des données de téléprésence. Ces formats sont aussi appelés « format de transport » dont les principaux sont MPEG-TS du standard ISO/IEC 13818-1 et RTP. De plus, il est possible d'ajouter à ces mécanismes une méthode d'encryption du flux de donnée avant transmission sur le réseau. La méthode inverse est alors appliquée à la réception des données et permet ainsi d'assurer la confidentialité des données. Dans ce cas, le format de transport RTP est décliné en SRTP prévu à cet effet, relatifs aux normes RFC 3550 et RCF 3711.

En référence à la Figure 6, le premier bloc de traitement 71 se scinde en un premier sous-bloc 711 dédié aux données télémétriques, et un second sous-bloc 712 dédié aux données optiques et aux données audio (flux vidéo et audio). Il est également prévu une horloge de référence 713 nécessaire aux opérations de synchronisation et de multiplexage.

Dans le premier sous-bloc 711, sont prévus successivement :
- un moyen de collecte des données télémétriques 7111 qui collecte les données télémétriques issues pour rappel du ou des capteurs d'état 350 ;
- un moyen de compilation des données télémétriques 7112, qui met en œuvre un formatage (ou une compilation) de l'ensemble des données télémétriques dans un tableau de données compatible au format d'un buffer image en entrée du moyen d'encodage 7113, avec par exemple une conversion de chaque triplet ou quadruplet d'octets du tableau de données télémétriques en information chromatique suivant une table de correspondance ;
- un moyen d'encodage 7113 (autrement dit un encodeur vidéo) qui met en œuvre un encodage des données télémétriques formatées dans un format standard existant de vidéo compressée, tels que H264, H265, VP8 ou VP9.

Dans le second sous-bloc 712, sont prévues :
- une ligne vidéo comprenant successivement un moyen d'acquisition des données optiques 7121 qui réceptionne les données optiques issues pour rappel du ou des capteurs optiques 36, et un moyen d'encodage 7122 (autrement dit un encodeur vidéo similaire au moyen d'encodage 7113) qui met en œuvre un encodage des données optiques dans un format standard existant de vidéo compressée, tels que H264, H265, VP8 ou VP9 ;
- une ligne audio comprenant successivement un moyen d'acquisition des données audio 7123 qui réceptionne les données audio issues pour rappel du ou des capteurs acoustiques 37, et un moyen d'encodage 7124 (autrement dit un encodeur audio) qui met en œuvre un encodage des données audio dans un format standard compressé compatible avec le format existant de vidéo compressée.

Le deuxième bloc de traitement 72 reçoit donc en entrée :
- le signal d'horloge provenant de l'horloge de référence 713 ;
- les données télémétriques encodées dans un format standard de vidéo compressée, issues du moyen d'encodage 7113 ;
- les données vidéo encodées dans le même format standard de vidéo compressée, issues du moyen d'encodage 7122 ;
- les données audio encodées dans un format compatible avec le format standard de vidéo compressée, issues du moyen d'encodage 7124 ; et
- les signaux de conduite à distance SCD issus des dispositifs de pilotage 301, 302, 303, et en particulier issues d'un moyen de collecte 714 qui collecte les données issues des différents dispositifs de pilotage 301, 302, 303.

Le deuxième bloc de traitement 72 opère une synchronisation et un multiplexage des données télémétriques encodées, des données audio encodées, des données vidéo encodées et des signaux de conduite à distance, en ayant pour référence le signal d'horloge.

Ainsi, les données télémétriques, les données vidéo, les données audio et les signaux de conduite à distance sont multiplexés dans un seul signal de transport (pour rappel appelé flux de données montante FDM) dans un format existant pour être diffusées sur le réseau de télécommunication 4, et les données sont restituées suite au décodage du flux de données montante FDM par un décodeur vidéo existant.

Dans le flux descendant 62, le premier bloc de traitement 81 et le deuxième bloc de traitement 82 mettent en œuvre les mêmes moyens sur les signaux de captation SCV issus des capteurs de véhicule sans pilote 211, 212, 213, 214, 215.

Les signaux de captation SCV comprennent :
- des données télémétriques qui sont issues des capteurs de mouvement 213, 214 et des capteurs d'état 215, c'est-à-dire l'ensemble des données autres que vidéo et audio telles que les données haptiques et les informations d'état (données acquises sur le(s) bus de communication 216) ;
- des données optiques (ou flux vidéo) qui sont issues du ou des capteurs optiques 211 ; et
- des données audio (ou flux audio) qui sont issues du ou des capteurs acoustiques 212.

Le premier bloc de traitement 81 se scinde en un premier sous-bloc dédié aux données télémétriques, et un second sous-bloc dédié aux données optiques et aux données audio (flux vidéo et audio). Il est également prévu une horloge de référence nécessaire aux opérations de synchronisation et de multiplexage.

Dans le premier sous-bloc, sont prévus successivement :
- un moyen de collecte des données télémétriques qui collecte les données télémétriques issues pour rappel des capteurs de mouvement 213, 214 et des capteurs d'état 215 ;
- un moyen de compilation des données télémétriques, qui met en œuvre un formatage (ou une compilation) de l'ensemble des données télémétriques dans un tableau de données compatible au format d'un buffer image en entrée du moyen d'encodage, avec par exemple une conversion de chaque triplet ou quadruplet d'octets du tableau de données télémétriques en information chromatique suivant une table de correspondance ;
- un moyen d'encodage (autrement dit un encodeur vidéo) qui met en œuvre un encodage des données télémétriques formatées dans un format standard existant de vidéo compressée, tels que H264, H265, VP8 ou VP9.

Dans le second sous-bloc, sont prévues :
- une ligne vidéo comprenant successivement un moyen d'acquisition des données optiques qui réceptionne les données optiques issues pour rappel du ou des capteurs optiques 211, et un moyen d'encodage vidéo (autrement dit un encodeur vidéo similaire au moyen d'encodage précité) qui met en œuvre un encodage des données optiques dans un format standard existant de vidéo compressée, tels que H264, H265, VP8 ou VP9 ;
- une ligne audio comprenant successivement un moyen d'acquisition des données audio qui réceptionne les données audio issues pour rappel du ou des capteurs acoustiques 212, et un moyen d'encodage audio (autrement dit un encodeur audio) qui met en œuvre un encodage des données audio dans un format standard compressé compatible avec le format existant de vidéo compressée.

Le deuxième bloc de traitement 82 reçoit donc en entrée :
- le signal d'horloge provenant de l'horloge de référence ;
- les données télémétriques encodées dans un format standard de vidéo compressée, issues du moyen d'encodage du premier sous-bloc ;
- les données vidéo encodées dans le même format standard de vidéo compressée, issues du moyen d'encodage vidéo du second sous-bloc ;
- les données audio encodées dans un format compatible avec le format standard de vidéo compressée, issues du moyen d'encodage audio du second sous-bloc.

Le deuxième bloc de traitement 82 opère une synchronisation et un multiplexage des données télémétriques encodées, des données audio encodées et des données vidéo encodées, en ayant pour référence le signal d'horloge.

La suite de la description concerne les paramètres de conduite employés pour sélectionner le mode de pilotage autonome ou assistée (pilotage par l'unité de conduite autonome ou assistée 23) ou le mode de pilotage à distance (pilotage par le conducteur CO distant), ainsi que le procédé de sélection de l'un ou l'autre de ces deux modes.

Ces paramètres de conduite comprennent au moins un paramètre de communication représentatif du canal de communication établi entre les dispositifs de télécommunication 25, 26, autrement dit entre le poste de conduite à distance 3 et le véhicule sans pilote 2.

A titre d'exemple, le paramètre de communication est sélectionné parmi l'un au moins des paramètres suivants (et peut donc comprendre plusieurs de ces paramètres) :
- paramètre représentatif d'une qualité de signal ;
- paramètre représentatif d'une vitesse de transmission ;
- paramètre représentatif d'une latence de transmission ;
- paramètre représentatif d'une bande passante de la communication ;
- paramètre représentatif d'un débit de transmission ;
- paramètre représentatif d'une authentification des données ;
- paramètre représentatif d'une synchronisation entre le terminal de téléprésence du conducteur et le terminal de téléprésence du véhicule qui communiquent dans le canal de communication.

Le paramètre représentatif d'une qualité de signal peut par exemple correspondre à un taux d'erreur des données reçues.

Le paramètre représentatif d'une vitesse de transmission peut par exemple correspondre à un temps de transmission des données sur le canal de communication.

Le paramètre représentatif d'une latence de transmission peut par exemple correspondre à un délai global ou un retard global de part et d'autre du réseau de télécommunication.

Le paramètre représentatif d'une bande passante de la communication peut par exemple correspondre à une quantité de données maximale admissible par le canal de communication sans augmentation du délai de transmission.

Le paramètre représentatif d'une authentification des données peut par exemple correspondre à une identification et une certification des sources des données.

Le paramètre représentatif d'une synchronisation peut par exemple correspondre à une synchronisation entre les différents types de données afin que l'expérience utilisateur de part et d'autre du système soit réaliste.

En effet, Le bon fonctionnement du présent système de conduite à distance 1 est, comme décrit précédemment, très dépendant de la transmission des données au travers du canal de communication, ce dernier ayant été établi par la plateforme de service de téléprésence 40 entre le poste de conduite à distance 3 et le véhicule sans pilote 2. Par conséquent, il est possible que l'expérience de téléprésence soit perturbée voire interrompue pendant une période de conduite du fait de défauts ou de retards dans la communication.

Lorsque ces problèmes surviennent, il est indispensable de mettre en œuvre de manière exclusive le mode de pilotage autonome ou assistée afin de par exemple stopper le déplacement du véhicule sans pilote 2, pallier l'absence temporaire de contrôle du conducteur CO en assurant la continuité de la conduite du véhicule sans pilote 2 jusqu'à ce que la communication soit rétablie, ou encore, prendre le contrôle total de la conduite du véhicule sans pilote 2 pour atteindre le point de destination prévu de manière autonome.

Aussi, il faut prendre en considération que même si la communication n'est en rien perturbée, la transmission au travers du canal de communication du véhicule sans pilote 2 vers le poste de conduite à distance 3 puis la transmission inverse du poste de conduite à distance 3 vers le véhicule sans pilote 2 engendre un délai non négligeable lorsque le conducteur CO doit réagir à une situation imprévue et urgente. Ce délai vient s'ajouter au temps de réactivité normal du conducteur CO dans le cas où ce dernier serait à bord du véhicule.

Ainsi, il est avantageux de considérer également d'autres paramètres, à savoir des paramètres de conduite qui comprennent au moins un paramètre choisi parmi les paramètres suivants (et peut donc comprendre plusieurs de ces paramètres) :
- paramètre représentatif d'une trajectoire ou d'une direction du véhicule sans pilote 2 ;
- paramètre représentatif d'une vitesse ou d'une accélération ou d'une décélération du véhicule sans pilote 2 ;
- paramètre représentatif d'une présence d'un obstacle sur la trajectoire du véhicule sans pilote 2 ;
- paramètre représentatif d'un niveau de réactivité du conducteur CO.

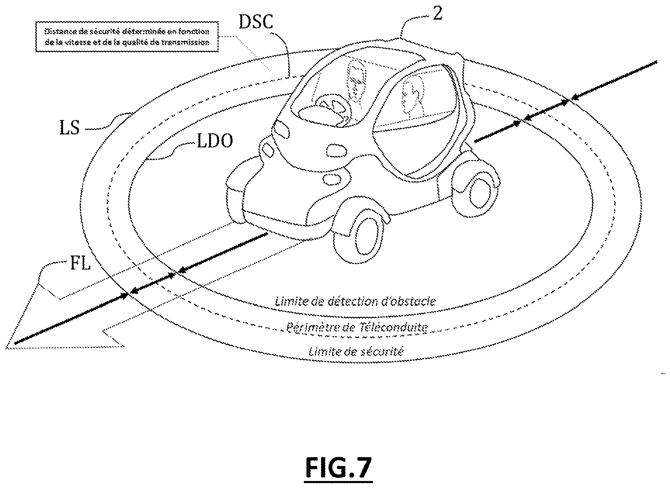

Ces paramètres sont pour rappel comparés à des seuils, et il est ainsi possible d'établir par exemple des distances de sécurité (voir Figure 7) qui sont notamment définies par le législateur en fonction de la vitesse et de l'endroit où le véhicule sans pilote 2 se déplace. Ces distances de sécurités sont établies afin de permettre à n'importe quel conducteur d'avoir le temps suffisant pour percevoir le danger, déterminer la réaction et agir afin d'éviter la collision.

Cette distance de sécurité est commune à tout conducteur malgré un temps de réaction variable en fonction de nombreux critères tels que l'âge, l'attention ou encore l'état de santé.

Par conséquent, puisque le présent système de conduite à distance 1 ajoute un délai supplémentaire, il est permis de mettre en œuvre grâce à ces paramètres et grâce à l'unité de conduite autonome ou assistée 23 un mode qui permet automatiquement (sans intervention du conducteur CO) de par exemple :
- compenser une perte de réactivité du conducteur à la survenue d'un obstacle sur la trajectoire du véhicule sans pilote 2 ;
- gérer les perturbations sur le canal de communication entre le poste de conduite à distance 3 et le véhicule sans pilote 2 tel que décrit précédemment ;
- limiter la vitesse de déplacement du véhicule sans pilote 2 à une vitesse maximum déterminée sur la base de critères de qualité de la transmission des données comprenant le délai global sur le canal de communication.

La Figure 7 illustre un véhicule sans pilote 2 en cours de déplacement, avec une illustration de différentes limites autour du véhicule sans pilote 2. La trajectoire du véhicule sans pilote 2 est schématisée par une flèche FL orientée vers l'avant, étant noté que la description suivante s'applique à n'importe quelle trajectoire du véhicule sans pilote 2.

Dans le mode de pilotage à distance, le véhicule sans pilote 2 est entièrement contrôlé par le conducteur CO depuis le poste de conduite à distance 3. Dans ce mode de pilotage à distance, le terminal de téléprésence du conducteur 22, pour rappel installé dans le véhicule sans pilote 2, communique avec l'unité de conduite autonome ou assistée 23 afin d'obtenir un accès exclusif aux dispositifs de commande 201, 202, 203 présentes dans le véhicule sans pilote 2.

Durant ce mode de pilotage à distance, l'unité de conduite autonome ou assistée 23 surveille notamment, à l'aide de moyens qui lui sont propres, qu'aucun obstacle ne se trouve sur la trajectoire FL du véhicule, ce qui se traduit par une surveillance d'un paramètre représentatif d'une présence d'un obstacle sur la trajectoire du véhicule sans pilote 2. Cette surveillance de ce paramètre représentatif d'une présence d'un obstacle sur la trajectoire du véhicule sans pilote 2 est assurée par exemple par un ensemble de capteurs de type radar ou autre détecteur dont la portée de détection est limitée à une limite de détection d'obstacle LDO, qui se présente sous la forme d'un cercle.

Dans le cas d'une détection d'un obstacle, et sous des conditions spécifiques à l'unité de conduite autonome ou assistée 23, cette unité de conduite autonome ou assistée 23 prend automatiquement la main sur le pilotage pour passer dans un mode de pilotage autonome ou assistée (pilotage exclusif par l'unité de conduite autonome ou assistée 23), autrement dit l'unité de conduite autonome ou assistée 23 prend le contrôle des dispositifs de commande 201, 202, 203 afin d'effectuer un arrêt d'urgence et/ou un évitement d'urgence de l'obstacle.

Durant ce mode de pilotage à distance, il est également pris en considération une distance limite de sécurité LS prédéfini pour le véhicule sans pilote 2 lorsqu'il est en mode de pilotage à distance. Cette distance limite de sécurité LS est déterminée selon les critères suivants :
- un paramètre représentatif d'une présence d'un obstacle sur la trajectoire du véhicule sans pilote 2 (autrement dit une détection d'on obstacle) ;
- un temps de réaction maximal entre l'apparition d'un obstacle sur la trajectoire du véhicule sans pilote 2 et l'action du conducteur CO sur le véhicule sans pilote 2 dans un mode de pilotage à distance (intégrant ainsi les temps de transmission montant et descendant et le délai de réaction du conducteur) qui traduit le fait que le conducteur CO dispose d'assez de temps pour percevoir l'obstacle et agir à distance sur le véhicule sans pilote 2 afin d'éviter la collision ;
- la vitesse du véhicule sans pilote 2 qui est pris en considération pour permettre à l'unité de conduite autonome ou assistée 23 d'intervenir efficacement lorsque l'obstacle (ou le danger) pourra être détecté.

Durant ce mode de pilotage à distance, il est également pris en considération une distance de sécurité de conduite à distance DSC pendant le mode de pilotage à distance. Cette distance de sécurité de conduite à distance DSC est évaluée en fonction de la vitesse du véhicule sans pilote 2 et d'un ou plusieurs paramètres de communication représentatifs d'une qualité de signal entre le véhicule sans pilote 2 et le poste de conduite à distance 3.

Si la vitesse augmente, la distance de sécurité de conduite à distance DSC augmente d'autant. Lorsque la vitesse du véhicule sans pilote 2 est telle que la distance de sécurité de conduite à distance DSC dépasse la distance limite de sécurité LS, alors l'unité de conduite autonome ou assistée 23 intervient dans le pilotage pour qu'une commande d'accélération (commande du conducteur CO sur le dispositif de commande d'accélération 203) ne soit plus prise en compte jusqu'à ce que la vitesse du véhicule sans pilote 2 redescende au point que la distance de sécurité de conduite à distance DSC revienne en-dessous de la distance limite de sécurité LS.

Le paramètre représentatif d'une qualité de signal est notamment évalué en fonction des informations de débit, de latence, de synchronisation et d'authentification des flux de données du canal de communication. Si la qualité de transmission se dégrade, la distance de sécurité de conduite à distance DSC augmente d'autant. Lorsque la qualité de transmission est telle que la distance de sécurité de conduite à distance DSC dépasse la distance limite de sécurité LS, alors l'unité de conduite autonome ou assistée 23 prend le commande exclusif des dispositifs de commande 201, 202, 203 du véhicule sans pilote 2 (passage automatique en mode de pilotage autonome ou assistée) afin de prendre le contrôle du véhicule sans pilote 2 de manière adéquate, par exemple pour effectuer un arrêt du véhicule sans pilote 2, une continuité de la conduite de manière transitoire ou une conduite autonome jusqu'à destination (éventuellement le temps que la qualité de transmission ne soit pas revenue à un niveau telle que la distance de sécurité de conduite à distance DSC revienne en-dessous de la distance limite de sécurité LS).

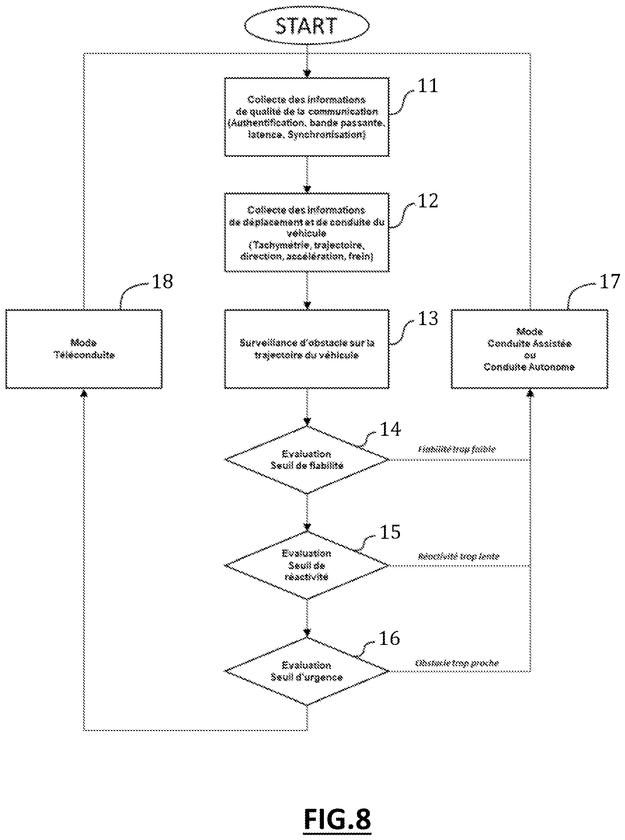

La Figure 8 illustre le procédé de sélection entre le mode de pilotage autonome ou assistée et le mode de pilotage à distance. Pour ce faire, le système de conduite à distance 1 comprend un moyen de sélection qui met en œuvre ce procédé de sélection.

Au départ (« START »), le véhicule sans pilote 2 est dans le mode de pilotage à distance.

Ce procédé de sélection met en œuvre une première étape de collecte 11 pour une collecte des informations relatives à un ou plusieurs paramètres de communication. Pour la suite de la description, cette première étape de collecte 11 opère une collecte de paramètres relatifs à une qualité de transmission des données sur le canal de communication, avec notamment des informations sur :
- le débit des données, aussi appelé bande passante (paramètre représentatif d'une bande passante de la communication ou paramètre représentatif d'un débit de transmission) ;
- la latence de transmission, aussi appelé délai (paramètre représentatif d'une latence de transmission) ;
- la synchronisation des données (paramètre représentatif d'une synchronisation) ;
- l'authentification de la source des données (paramètre représentatif d'une authentification des données).

Ce procédé de sélection met en œuvre une deuxième étape de collecte 12 pour une collecte des informations relatives au déplacement et à la trajectoire du véhicule. Pour la suite de la description, cette deuxième étape de collecte 12 opère une collecte des paramètres suivants :
- paramètre représentatif d'une vitesse du véhicule sans pilote 2, aussi appelé paramètre de tachymétrie ;
- paramètre représentatif d'une trajectoire ou d'une direction du véhicule sans pilote 2, notamment en collectant une position du volant de direction du véhicule sans pilote 2 ;
- paramètre représentatif d'une décélération (ou d'un freinage) du véhicule sans pilote 2 ou d'un niveau de freinage opéré par le conducteur CO dans le poste de conduite à distance 3 ;
- paramètre représentatif d'une accélération du véhicule sans pilote 2 ou d'un niveau d'accélération opéré par le conducteur CO dans le poste de conduite à distance 3.

Ce procédé de sélection met en œuvre une troisième étape de surveillance 13 pour une surveillance d'obstacle sur la trajectoire du véhicule sans pilote 2, ce qui revient à une collecte d'un paramètre représentatif d'une présence d'un obstacle sur la trajectoire du véhicule sans pilote 2. Comme précédemment expliqué, cette surveillance peut être opérée par l'unité de conduite autonome ou assistée 23 à l'aide de ses moyens propres tels qu'un ensemble de capteurs de type radar ou autre détecteur.

Ce procédé de sélection met en œuvre une quatrième étape d'évaluation d'une fiabilité de transmission 14 qui met en œuvre une évaluation d'une fiabilité de la transmission entre le véhicule sans pilote 2 et le poste de conduite à distance 3, comme décrit précédemment en référence à la Figure 7 avec le calcul de la distance de sécurité de conduite à distance DSC, et :
- si la fiabilité est trop faible, alors le procédé de sélection bascule dans une étape de sélection du mode de pilotage autonome ou assistée 17 ;
- sinon le procédé de sélection se poursuit avec la cinquième étape d'évaluation d'un seuil de réactivité 15.

Ce procédé de sélection met ainsi en œuvre une cinquième étape d'évaluation d'une fiabilité de réactivité 15 qui met en œuvre une évaluation d'une fiabilité de la réactivité du conducteur face à un événement imprévu, comme décrit précédemment en référence à la Figure 7 avec la distance limite de sécurité LS, et :
- si la réactivité du conducteur est trop lente, alors le procédé de sélection bascule dans l'étape de sélection du mode de pilotage autonome ou assistée 17 ;
- sinon le procédé de sélection se poursuit avec la sixième étape d'évaluation d'un seuil d'urgence 16.

Ce procédé de sélection met ainsi en œuvre une sixième étape d'évaluation d'un seuil d'urgence 16 qui met en œuvre une évaluation du seuil d'urgence suite à une détection d'obstacle par l'unité de conduite autonome ou assistée 23, comme décrit précédemment en référence à la Figure 7 avec la limite de détection d'obstacle LDO, et :
- si l'obstacle est trop proche, alors le procédé de sélection bascule dans l'étape de sélection du mode de pilotage autonome ou assistée 17 ;
- sinon le procédé de sélection poursuit dans l'étape de sélection (ou de maintien) du mode de pilotage à distance 18, et le procédé de sélection recommence.

## Revendications

1. Système de conduite à distance (1) d'un véhicule sans pilote (2), de type véhicule terrestre motorisé, évoluant dans un environnement, ledit système de conduite à distance (1) comprenant le véhicule sans pilote (2) et un poste de conduite à distance (3) connecté à distance au véhicule sans pilote (2) via un canal de communication établi dans un réseau de télécommunication (4),
• ledit véhicule sans pilote (2) comprenant :
- des dispositifs de commande (201, 202, 203) pour commander un déplacement du véhicule sans pilote (2) et comprenant au moins un dispositif de commande de freinage (201), un dispositif de commande de direction (202) et un dispositif de commande d'accélération (203) ;
- plusieurs capteurs de véhicule (211, 212, 213, 214, 215) couplés au véhicule sans pilote (2), dont au moins un capteur optique (211) et un capteur acoustique (212) pour une captation de signaux analogiques optiques et acoustiques de l'environnement dans lequel évolue le véhicule sans pilote (2), au moins un capteur de mouvement (213; 214) pour une captation de mouvements au sein du véhicule sans pilote (2), et au moins un capteur d'état (215) pour un captation d'une information d'état relative au véhicule sans pilote (2) ;
- un terminal de téléprésence du conducteur (22) relié aux dispositifs de commande (201, 202, 203) pour les commander en fonction de signaux de conduite à distance (SCD) provenant du poste de conduite à distance (3), ledit terminal de téléprésence du conducteur (22) étant également relié aux capteurs de véhicule (211, 212, 213, 214, 215) pour recevoir leurs signaux de captation (SCV) ;
- un dispositif de télécommunication (25) relié au terminal de téléprésence du conducteur (22) et prévu pour établir une communication à distance avec le poste de conduite à distance (3) via le réseau de télécommunication (4) afin de recevoir des signaux de conduite à distance (SCD) et d'émettre les signaux de captation (SCV) issus des capteurs de véhicule (211, 212, 213, 214, 215) ;
- une unité de conduite autonome ou assistée (23) reliée aux dispositifs de commande (201, 202, 203) et reliée au terminal de téléprésence du conducteur (22) pour une commande exclusive des dispositifs de commande (201, 202, 203) par l'unité de conduite autonome ou assistée (23) ou par le terminal de téléprésence du conducteur (22) en fonction d'une comparaison entre au moins un paramètre de conduite mesurés en temps réel et au moins un seuil de sécurité associé ;
• ledit poste de conduite à distance (3) comprenant :
- un poste d'accueil (30) pour accueillir un conducteur (CO) ;
- des dispositifs de pilotage (301, 302, 303) comprenant au moins un dispositif de pilotage de freinage (301), un dispositif de pilotage de direction (302) et un dispositif de pilotage d'accélération (303), sur lesquels peut agir le conducteur (CO) pour produire des signaux de commande à distance (SCD) ;
- des émetteurs de téléconduite (311, 312, 313, 314, 315) dont au moins un émetteur optique (311) pour reproduire les signaux analogiques optiques captés par ledit au moins un capteur optique (211) du véhicule sans pilote (2), au moins un émetteur acoustique (312) pour reproduire les signaux analogiques acoustiques captés par ledit au moins un capteur acoustique (212) du véhicule sans pilote (2), au moins un émetteur de mouvement (313 ; 314) pour reproduire les mouvements captés par ledit au moins un capteur de mouvement (213 ; 214) du véhicule sans pilote (2), et au moins un émetteur d'état (315) pour informer le conducteur (CO) de l'information d'état capté par ledit au moins un capteur d'état (215) du véhicule sans pilote (2) ;
- un terminal de téléprésence du véhicule (32) relié aux dispositifs de pilotage (301, 302, 303) pour recevoir les signaux de conduite à distance (SCD), ledit terminal de téléprésence du véhicule (32) étant également relié aux émetteurs de téléconduite (311, 312, 313, 314, 315) pour les commander en fonction des signaux de captation (SCV) issus des capteurs de véhicule (211, 212, 213, 214, 215) ;
- un dispositif de communication (35) relié au terminal de téléprésence du véhicule (32) et prévu pour établir une connexion à distance avec le véhicule sans pilote (2) via le réseau de télécommunication (4) afin de recevoir les signaux de captation (SCV) issus des capteurs de véhicule (211, 212, 213, 214, 215) et d'émettre les signaux de conduite à distance (SCD) ; ledit système de conduite à distance (1 étant **caractérisé en ce qu'**il comprend en outre des moyens d'interaction (36, 37, 350, 26, 27, 6) permettant à un conducteur (CO) présent dans le poste de conduite à distance (3) d'interagir de manière bidirectionnelle avec une ou plusieurs personnes présentes autour du véhicule sans pilote (2) grâce à des transmissions optiques et acoustiques bidirectionnelles entre le véhicule sans pilote (2) et le poste de conduite à distance (3), lesdits moyens d'interaction comprenant :
• des capteurs de poste (36, 37, 350) présents sur le poste de conduite à distance (3) dont au moins un capteur optique (36) et un capteur acoustique (37) pour une captation de signaux analogiques optiques et acoustiques en provenance du poste d'accueil (30) accueillant le conducteur (CO), et le terminal de téléprésence du véhicule (32) est relié aux capteurs de poste (36, 37, 350) pour recevoir leurs signaux de captation (SCP) et pour les communiquer au véhicule sans pilote (2) via les dispositifs de télécommunication (25, 35) ;
• des émetteurs de véhicule (26, 27) présents sur le véhicule sans pilote (2) dont au moins un émetteur optique (26) pour reproduire les signaux analogiques optiques captés par ledit au moins un capteur optique (36) du poste de conduite à distance (3) et au moins un émetteur acoustique (27) pour reproduire les signaux analogiques acoustiques captés par ledit au moins un capteur acoustique (37) du poste de conduite à distance (3), et le terminal de téléprésence du conducteur (22) est relié aux émetteurs de véhicule (26, 27) pour les commander en fonction des signaux de captation (SCP) des capteurs de poste (36, 37, 350) ;
• un outil de transmission (6) gérant la transmission des signaux de captation (SCP, SCV) et des signaux de conduite à distance (SCD) en continue de part et d'autre du canal de communication entre le véhicule sans pilote (2) et le poste de conduite à distance (3), dans lequel l'outil de transmission (6) gère un flux montant (61) qui part du poste de conduite à distance (3) pour être transmis au véhicule sans pilote (2), et un flux descendant (62) qui part du véhicule sans pilote (2) pour être transmis au poste de conduite à distance (3), et où l'outil de transmission (6) comprend pour le flux descendant (62) des moyens de traitement (81, 82) mettant en œuvre une synchronisation des signaux de captation (SCV) issus des capteurs de véhicule (211, 212, 213, 214, 215) entre eux ;
dans lequel ledit outil de transmission (6) comprend pour le flux montant (61) des moyens de traitement (71, 72) mettant en œuvre une synchronisation des signaux de conduite à distance (SCD) issus des dispositifs de pilotage (301, 302, 303) et des signaux de captation (SCP) issus des capteurs de poste (36, 37, 350).

2. Système de conduite à distance (1) selon l'une quelconque des revendications précédentes, dans lequel le véhicule sans pilote (2) présente des vitrages avant, de droite et de gauche (29) et le au moins un émetteur optique (26) du véhicule sans pilote (2) est disposé à l'intérieur du véhicule sans pilote (2) de sorte à être visible de l'extérieur via les vitrages avant, droite et gauche (29).

3. Système de conduite à distance (1) selon la revendication 2, dans lequel le au moins un émetteur optique (26) comprend un système d'affichage avant placé en face du vitrage avant (29), un système d'affichage de droite placé en face du vitrage de droite (29) et un système d'affichage de gauche placé en face du vitrage de gauche (29).

4. Système de conduite à distance (1) selon l'une quelconque des revendications précédentes, dans lequel le au moins un capteur de mouvement (213 ; 214) du véhicule sans pilote (2) comprend au moins une centrale inertielle (213) mesurant les mouvements de roulis, de tangage et de lacet du véhicule sans pilote (2) à un emplacement de conduite, et le au moins un émetteur de mouvement (313 ; 314) comprend au moins un actionneur (313) pour reproduire les mouvements de roulis, de tangage et de lacet dans le poste d'accueil (30) du poste de conduite à distance (3).

5. Système de conduite à distance (1) selon l'une quelconque des revendications précédentes, dans lequel le au moins un capteur de mouvement (213; 214) du véhicule sans pilote (2) comprend des accéléromètres mesurant les vibrations au niveau des dispositifs de commande (201, 202, 203) à un emplacement de conduite, et le au moins un émetteur de mouvement (313; 314) comprend des vibreurs (314) pour reproduire les vibrations dans les dispositifs de pilotage (301, 302, 303) correspondants du poste de conduite à distance (3).

6. Système de conduite à distance (1) selon l'une quelconque des revendications précédentes, dans lequel l'unité de conduite autonome ou assistée (23) comprend un moyen de sélection mettant en œuvre une sélection entre :
- un mode de pilotage autonome ou assistée correspondant à un pilotage exclusivement par l'unité de conduite autonome ou assistée (23) ; ou
- un mode de pilotage à distance correspondant à un pilotage par le conducteur (CO) distant ;
et dans lequel le moyen de sélection est conformé pour mettre en oeuvre :
- une collecte d'informations relatives à un ou plusieurs paramètres de conduite ;
- une comparaison du ou des paramètres de conduite avec un ou des seuils de sécurité associés ;
- une activation du mode de pilotage autonome ou assistée si un des paramètres de conduite dépasse le seuil de sécurité correspondant.

7. Système de conduite à distance (1) selon la revendication 6, dans lequel les paramètres de conduite comprennent au moins un paramètre de communication représentatif du canal de communication établi entre les dispositifs de télécommunication (25, 26).

8. Système de conduite à distance (1) selon la revendication 7, dans lequel le paramètre de communication est sélectionné parmi l'un au moins des paramètres suivants :
- paramètre représentatif d'une qualité de signal ;
- paramètre représentatif d'une vitesse de transmission ;
- paramètre représentatif d'une latence de transmission ;
- paramètre représentatif d'une bande passante de la communication ;
- paramètre représentatif d'un débit de transmission ;
- paramètre représentatif d'une authentification des données ;
- paramètre représentatif d'une synchronisation entre le terminal de téléprésence du conducteur (22) et le terminal de téléprésence du véhicule (32) qui communiquent dans le canal de communication.

9. Système de conduite à distance (1) selon l'une quelconque des revendications 6 à 8, dans lequel les paramètres de conduite comprennent au moins un paramètre choisi parmi les paramètres suivants :
- paramètre représentatif d'une trajectoire ou d'une direction du véhicule sans pilote (2) ;
- paramètre représentatif d'une vitesse ou d'une accélération ou d'une décélération du véhicule sans pilote (2) ;
- paramètre représentatif d'une présence d'un obstacle sur la trajectoire du véhicule sans pilote (2) ;
- paramètre représentatif d'un niveau de réactivité du conducteur (CO).

10. Système de conduite à distance (1) selon les revendications 6, 7, 8 et 9, dans lequel le moyen de sélection est conformé pour mettre en oeuvre :
- une collecte d'informations relatives à un ou plusieurs paramètres de communication ;
- une collecte d'informations relatives à un paramètre représentatif d'une vitesse du véhicule sans pilote (2) ;
- une collecte d'informations relatives à un paramètre représentatif d'une présence d'un obstacle sur la trajectoire du véhicule sans pilote (2) ;
- une évaluation d'une distance de sécurité de conduite à distance (DSC) sur la base du paramètre représentatif d'une vitesse du véhicule sans pilote (2) et d'au moins un paramètre de communication ;
- une évaluation d'une distance limite de sécurité (LS) établie sur la base du paramètre représentatif d'une présence d'un obstacle sur la trajectoire du véhicule sans pilote (2), du paramètre représentatif d'une vitesse du véhicule sans pilote (2) et d'un temps de réaction maximal entre l'apparition d'un obstacle sur la trajectoire du véhicule sans pilote (2) et l'action du conducteur (CO) sur le véhicule sans pilote (2) dans un mode de pilotage à distance ;
- une activation du mode de pilotage autonome ou assistée si la distance de sécurité de conduite à distance (DSC) dépasse la distance limite de sécurité (LS).

11. Système de conduite à distance (1) selon l'une quelconque des revendications précédentes, dans lequel les moyens de traitement (71, 72) de l'outil de transmission (6) pour le flux montant (61) mettent en œuvre une synchronisation et un multiplexage des signaux de conduite à distance (SCD) issus des dispositifs de pilotage (301, 302, 303) et des signaux de captation (SCP) issus des capteurs de poste (36, 37, 350).

12. Système de conduite à distance (1) selon la revendication 11, dans lequel les moyens de traitement (71, 72) de l'outil de transmission (6) pour le flux montant (61) comprennent un premier bloc de traitement (71) mettant en œuvre un encodage et une compression des signaux de captation (SCP) issus des capteurs de poste (36, 37, 350), suivi d'un deuxième bloc de traitement (72) mettant en œuvre une synchronisation et un multiplexage des signaux de conduite à distance (SCD) issus des dispositifs de pilotage (301, 302, 303) et des signaux de captation (SCP) encodés et compressés dans le premier bloc de traitement (71).

13. Système de conduite à distance (1) selon l'une quelconque des revendications précédentes, dans lequel les moyens de traitement (81, 82) de l'outil de transmission (6) pour le flux descendant (62) mettent en œuvre une synchronisation et un multiplexage des signaux de captation (SCV) issus des capteurs de véhicule (211, 212, 213, 214, 215)

14. Système de conduite à distance (1) selon la revendication 13, dans lequel les moyens de traitement (71, 72) de l'outil de transmission (6) pour le flux descendant (62) comprennent un premier bloc de traitement (81) mettant en œuvre un encodage et une compression des signaux de captation (SCV) issus des capteurs de véhicule (211, 212, 213, 214, 215), suivi d'un deuxième bloc de traitement (82) mettant en œuvre une synchronisation et un multiplexage des signaux de captation (SCV) encodés et compressés dans le premier bloc de traitement (82).

## Patentansprüche

1. Fernsteuerungssystem (1) eines fahrerlosen Fahrzeugs (2) vom Typ eines motorisierten Landfahrzeugs, das sich in einer Umgebung fortbewegt, wobei das Fernsteuerungssystem (1) das fahrerlose Fahrzeug (2) und eine Fernsteuerstation (3) umfasst, die remote an das fahrerlose Fahrzeug (2) über einen in einem Telekommunikationsnetz (4) eingerichteten Kommunikationskanal angeschlossen ist,
• das fahrerlose Fahrzeug (2) umfasst:
- Steuervorrichtungen (201, 202, 203) zum Steuern einer Bewegung des fahrerlosen Fahrzeugs (2) und mindestens umfassend eine Bremssteuervorrichtung (201), eine Lenksteuervorrichtung (202) und eine Beschleunigungssteuervorrichtung (203);
- mehrere mit dem fahrerlosen Fahrzeug (2) gekoppelte Fahrzeugsensoren (211, 212, 213, 214, 215), wovon mindestens ein optischer Sensor (211) und ein akustischer Sensor (212) zum Erfassen von optischen und akustischen Analogsignalen der Umgebung in der sich das fahrerlose Fahrzeug (2) fortbewegt, mindestens einen Bewegungssensor (213; 214) zum Erfassen von Bewegungen innerhalb des fahrerlosen Fahrzeugs (2) und mindestens einen Zustandssensor (215) zum Erfassen von Zustandsinformationen bezüglich des fahrerlosen Fahrzeugs (2);
- ein Fahrer-Telepräsenzterminal (22), das mit den Steuervorrichtungen (201, 202, 203) verbunden ist, um sie abhängig von den Fernsteuersignalen (SCD), die von der Fernsteuerstation (3) stammen, zu steuern, wobei das Fahrer-Telepräsenzterminal (22) auch mit den Fahrzeugsensoren (211, 212, 213, 214, 215) verbunden ist, um ihre Erfassungssignale (SCV) zu empfangen;
- eine Telekommunikationsvorrichtung (25), die mit dem Fahrer-Telepräsenzterminal (22) verbunden ist und vorgesehen ist, um eine Fernkommunikation mit der Fernsteuerstation (3) über das Telekommunikationsnetz (4) einzurichten, um Fernsteuersignale (SCD) zu empfangen und die Erfassungssignale (SCV) auszusenden, die von den Fahrzeugsensoren (211, 212, 213, 214, 215) hervorgegangen sind;
- eine autonome oder assistierte Steuereinheit (23), die mit den Steuervorrichtungen (201, 202, 203) verbunden ist und die mit dem Fahrer-Telepräsenzterminal (22) verbunden ist für eine ausschließliche Steuerung der Steuervorrichtungen (201, 202, 203) durch die autonome oder unterstützte Steuereinheit (23) oder durch das Fahrer-Telepräsenzterminal (22) abhängig von einer Gegenüberstellung zwischen mindestens einem in Echtzeit gemessenen Steuerparameter und mindestens einem zugeordneten Sicherheitsschwellenwert;
• wobei die Fernsteuerstation (3) umfasst:
- eine Fahrerstation (30) zur Aufnahme eines Fahrers (CO);
- Lenkvorrichtungen (301, 302, 303), mindestens umfassend eine Bremssteuervorrichtung (301), eine Lenksteuervorrichtung (302) und eine Beschleunigungssteuervorrichtung (303), auf die der Fahrer (CO) einwirken kann, um Fernsteuersignale (SCD) zu erzeugen;
- Fernbedienungssender (311, 312, 313, 314, 315), wovon mindestens ein optischer Sender (311) zur Wiedergabe der optischen Analogsignale, die vom mindestens einen optischen Sensor (211) des fahrerlosen Fahrzeugs (2) erfasst wurden, mindestens einen akustischen Sender (312) zur Wiedergabe der von dem mindestens einen akustischen Sensor (212) des fahrerlosen Fahrzeugs (2) erfassten akustischen Analogsignale, mindestens einen Bewegungssender (313; 314) zur Wiedergabe der Bewegungen, die durch den mindestens einen Bewegungssensor (213; 214) des fahrerlosen Fahrzeugs (2) erfasst wurden und mindestens einen Zustandssender (315) zum Informieren des Fahrers (CO) über die von dem mindestens einen Zustandssensor (215) erfassten Zustandsinformationen des fahrerlosen Fahrzeugs (2);
- ein Fahrzeug-Telepräsenzterminal (32), das mit den Lenkvorrichtungen (301, 302, 303) verbunden ist, um die Fernsteuersignale (SCD) zu empfangen, wobei das Fahrzeug-Telepräsenzterminal (32) auch mit den Fernbedienungssendern (311, 312, 313, 314, 315) verbunden ist, um sie abhängig von den Erfassungssignalen (SCV) zu steuern, die von den Fahrzeugsensoren (211, 212, 213, 214, 215) hervorgegangen sind;
- eine Kommunikationsvorrichtung (35), die mit dem Fahrzeug-Telepräsenzterminal (32) verbunden ist und vorgesehen ist, um eine Fernverbindung mit dem fahrerlosen Fahrzeug (2) über das Telekommunikationsnetz (4) einzurichten, um die Erfassungssignale (SCV) zu empfangen, die von den Fahrzeugsensoren (211, 212, 213, 214, 215) hervorgegangen sind und die Fernsteuersignale (SCD) auszusenden;
wobei das Fernsteuerungssystem **dadurch gekennzeichnet ist, dass** es ferner Interaktionsmittel (36, 37, 350, 26, 27, 6) umfasst, die es einem in der Fernsteuerstation (3) anwesenden Fahrer (CO) ermöglichen, bidirektional mit einer oder mehreren Personen, die im Bereich um das fahrerlose Fahrzeug (2) anwesend sind, zu interagieren, dank den bidirektionalen optischen und akustischen Übertragungen zwischen dem fahrerlosen Fahrzeug (2) und der Fernsteuerstation (3), wobei die Interaktionsmittel umfassen:
• Stationssensoren (36, 37, 350), die in der Fernsteuerstation (3) vorhanden sind, wovon mindestens ein optischer Sensor (36) und ein akustischer Sensor (37) zum Erfassen von optischen und akustischen Analogsignalen von der Fahrerstation (30), die den Fahrer (CO) aufnimmt, und das Fahrzeug-Telepräsenzterminal (32) ist mit den Stationssensoren (36, 37, 350) verbunden, um ihre Erfassungssignale (SCP) zu empfangen und sie dem fahrerlosen Fahrzeug (2) über die Telekommunikationsvorrichtungen (25, 35) zu kommunizieren;
• Fahrzeugsender (26, 27), die im fahrerlosen Fahrzeug (2) vorhanden sind, wovon mindestens ein optischer Sender (26) zur Wiedergabe der optischen Analogsignale, die von dem mindestens einen optischen Sensor (36) der Fernsteuerstation (3) erfasst wurden und mindestens ein akustischer Sender (27) zur Wiedergabe der akustischen Analogsignale, die von dem mindestens einen akustischen Sensor (37) der Fernsteuerstation (3) erfasst wurden, und das Fahrer-Telepräsenzterminal (22) ist mit den Fahrzeugsendern (26, 27) verbunden, um sie abhängig von den Erfassungssignalen (SCP) der Stationssensoren (36, 37, 350) zu steuern;
• ein Übertragungstool (6), das die kontinuierliche Übertragung der Erfassungssignale (SCP, SCV) und der Fernsteuersignale (SCD) auf beiden Seiten des Kommunikationskanals zwischen dem fahrerlosen Fahrzeug (2) und der Fernsteuerstation (3) verwaltet, in der das Übertragungstool (6) eine Aufwärtsverbindung (61) verwaltet, die von der Fernsteuerstation (3) ausgeht, um an das fahrerlose Fahrzeug (2) übertragen zu werden, und eine Abwärtsverbindung (62), die vom fahrerlosen Fahrzeug (2) ausgeht, um an die Fernsteuerstation (3) übertragen werden, und wobei das Übertragungstool (6) für die Abwärtsverbindung (62) Verarbeitungsmittel (81, 82) umfasst, die eine Synchronisation der Erfassungssignale (SCV) durchführen, die von den Fahrzeugsensoren (211, 212, 213, 214, 215) unter ihnen hervorgegangen sind;
wobei das Übertragungstool (6) für die Aufwärtsverbindung (61) Verarbeitungsmittel (71, 72) umfasst, die eine Synchronisation der Fernsteuersignale (SCD) durchführen, die von den Lenkvorrichtungen (301, 302, 303) hervorgegangen sind und der Erfassungssignale (SCP), die von den Stationssensoren (36, 37, 350) hervorgegangen sind.

2. Fernsteuerungssystem (1) nach einem der vorhergehenden Ansprüche, wobei das fahrerlose Fahrzeug (2) Scheiben auf der vorderen, rechten und linken Seite (29) aufweist und der mindestens eine optische Sender (26) des fahrerlosen Fahrzeugs (2) im Innern des fahrerlosen Fahrzeugs (2) so aufgestellt ist, dass er von außen über die vordere, rechte und linke Scheibe (29) sichtbar ist.

3. Fernsteuerungssystem (1) nach Anspruch 2, wobei der mindestens eine optische Sender (26) ein vorderes Anzeigesystem umfasst, das gegenüber der vorderen Scheibe (29) angeordnet ist, und ein rechtes Anzeigesystem, das gegenüber der rechten Scheibe (29) angeordnet ist, und ein linkes Anzeigesystem, das gegenüber der linken Scheibe (29) angeordnet ist.

4. Fernsteuerungssystem (1) nach einem der vorhergehenden Ansprüche, wobei der mindestens eine Bewegungssensor (213; 214) des fahrerlosen Fahrzeugs (2) mindestens eine Trägheitszentrale (213) umfasst, die die Roll-, Nick- und Gier-Bewegungen des fahrerlosen Fahrzeugs (2) an einem Steuerstandort misst, und der mindestens eine Bewegungssender (313; 314) mindestens einen Aktuator (313) zur Wiedergabe der Roll-, Nick- und Gier-Bewegungen in der Fahrerstation (30) der Fernsteuerstation (3) umfasst.

5. Fernsteuerungssystem (1) nach einem der vorangehenden Ansprüche, wobei der mindestens eine Bewegungssensor (213; 214) des fahrerlosen Fahrzeugs (2) Beschleunigungsmesser umfasst, die die Vibrationen auf der Ebene der Steuervorrichtungen (201, 202, 203) an einem Steuerstandort messen und der mindestens eine Bewegungssender (313; 314) Vibratoren (314) umfasst, zur Wiedergabe der Vibrationen in den entsprechenden Lenkvorrichtungen (301, 302, 303) der Fernsteuerstation (3).

6. Fernsteuerungssystem (1) nach einem der vorhergehenden Ansprüche, wobei die autonome oder unterstützte Steuereinheit (23) ein Auswahlmittel umfasst, das eine Auswahl durchführt zwischen:
- einem autonomen oder unterstützten Lenkmodus, der einem ausschließlichen Lenken durch die autonome oder unterstützte Steuereinheit (23) entspricht; oder
- einem Fernlenkmodus, der einem Lenken durch den Fahrer (CO) auf Distanz entspricht;
und wobei das Auswahlmittel angepasst ist, um durchzuführen:
- eine Sammlung von Informationen bezüglich einem oder mehreren Steuerparametern;
- eine Gegenüberstellung des oder der Steuerparameter mit einem oder den zugeordneten Sicherheitsschwellenwerten;
- eine Aktivierung des autonomen oder assistierten Lenkmodus, wenn einer der Steuerparameter die entsprechende Sicherheitsschwelle überschreitet.

7. Fernsteuerungssystem (1) nach Anspruch 6, wobei die Steuerparameter mindestens einen Kommunikationsparameter umfassen, der repräsentativ ist für den zwischen den Telekommunikationsvorrichtungen (25, 26) eingerichteten Kommunikationskanal.

8. Fernsteuerungssystem (1) nach Anspruch 7, wobei der Kommunikationsparameter aus mindestens einem der folgenden Parameter ausgelesen wird:
- Parameter, der repräsentativ ist für eine Signalqualität;
- Parameter, der repräsentativ ist für eine Übertragungsgeschwindigkeit;
- Parameter, der repräsentativ ist für eine Übertragungslatenz;
- Parameter, der repräsentativ ist für eine Bandbreite der Kommunikation;
- Parameter, der repräsentativ ist für eine Übertragungsrate;
- Parameter, der repräsentativ ist für eine Datenauthentifizierung;
- Parameter, der repräsentativ ist für eine Synchronisation zwischen dem Fahrer-Telepräsenzterminal (22) und dem Fahrzeug-Telepräsenzterminal (32), die im Kommunikationskanal kommunizieren.

9. Fernsteuerungssystem (1) nach einem der Ansprüche 6 bis 8, wobei die Steuerparameter mindestens einen Parameter umfassen, der aus den folgenden Parametern ausgewählt wird:
- Parameter, der repräsentativ ist für eine Trajektorie oder eine Richtung des fahrerlosen Fahrzeugs (2);
- Parameter, der repräsentativ ist für eine Geschwindigkeit oder eine Beschleunigung oder eine Verlangsamung des fahrerlosen Fahrzeugs (2);
- Parameter, der repräsentativ ist für das Vorhandensein eines Hindernisses auf der Trajektorie des fahrerlosen Fahrzeugs (2);
- Parameter, der repräsentativ ist für einen Reaktivitätsgrad des Fahrers (CO).

10. Fernsteuerungssystem (1) nach den Ansprüchen 6, 7, 8 und 9, wobei das Auswahlmittel angepasst ist, um durchzuführen:
- eine Sammlung von Informationen bezüglich einem oder mehreren Kommunikationsparametern;
- eine Sammlung von Informationen bezüglich eines Parameters, der repräsentativ ist für eine Geschwindigkeit des fahrerlosen Fahrzeugs (2);
- eine Sammlung von Informationen bezüglich eines Parameters, der repräsentativ ist für das Vorhandensein eines Hindernisses auf der Trajektorie des fahrerlosen Fahrzeugs (2);
- eine Bewertung eines Fernsteuerungssicherheitsabstands (DSC) auf der Grundlage des Parameters, der repräsentativ ist für eine Geschwindigkeit des fahrerlosen Fahrzeugs (2) und mindestens eines Kommunikationsparameters;
- eine Bewertung einer Sicherheitsabstandsbeschränkung (LS), die eingerichtet ist auf der Grundlage des Parameters, der repräsentativ ist für das Vorhandensein eines Hindernisses auf der Trajektorie des fahrerlosen Fahrzeugs (2), des Parameters, der repräsentativ ist für eine Geschwindigkeit des fahrerlosen Fahrzeugs (2) und einer maximalen Reaktionszeit zwischen dem Erscheinen eines Hindernisses auf der Trajektorie des fahrerlosen Fahrzeugs (2) und dem Einwirken des Fahrers (CO) auf das fahrerlose Fahrzeug (2) in einem Fernlenkmodus;
- eine Aktivierung des autonomen oder assistierten Lenkmodus, wenn der Fernsteuerungssicherheitsabstands (DSC) die Sicherheitsabstandsbeschränkung (LS) überschreitet.

11. Fernsteuerungssystem (1) nach einem der vorhergehenden Ansprüche, wobei die Verarbeitungsmittel (71, 72) des Übertragungstools (6) für die Aufwärtsverbindung (61) eine Synchronisierung und Multiplexierung der Fernsteuersignale (SCD) durchführen, die von den Lenkvorrichtungen (301, 302, 303) hervorgegangen sind und der Erfassungssignale (SCP), die von den Stationssensoren (36, 37, 350) hervorgegangen sind.

12. Fernsteuerungssystem (1) nach Anspruch 11, wobei die Verarbeitungsmittel (71, 72) des Übertragungstools (6) für die Aufwärtsverbindung (61) einen ersten Verarbeitungsblock (71) umfassen, der eine Verschlüsselung und eine Komprimierung der Erfassungssignale (SCP) durchführt, die von den Stationssensoren (36, 37, 350) hervorgegangen sind, gefolgt von einem zweiten Verarbeitungsblock (72), der eine Synchronisierung und Multiplexierung der Fernsteuersignale (SCD) durchführt, die von den Lenkvorrichtungen (301, 302, 303) hervorgegangen sind und der im ersten Verarbeitungsblock (71) verschlüsselten und komprimierten Erfassungssignale (SCP).

13. Fernsteuerungssystem (1) nach einem der vorhergehenden Ansprüche, wobei die Verarbeitungsmittel (81, 82) des Übertragungstools (6) für die Abwärtsverbindung (62) eine Synchronisierung und Multiplexierung der Erfassungssignale (SCV) durchführen, die von den Fahrzeugsensoren (211, 212, 213, 214, 215) hervorgegangen sind.

14. Fernsteuerungssystem (1) nach Anspruch 13, wobei die Verarbeitungsmittel (71, 72) des Übertragungstools (6) für die Abwärtsverbindung (62) einen ersten Verarbeitungsblock (81) umfassen, der eine Verschlüsselung und Komprimierung der Erfassungssignale (SCV) durchführt, die von den Fahrzeugsensoren (211, 212, 213, 214, 215) hervorgegangen sind, gefolgt von einem zweiten Verarbeitungsblock (82), der eine Synchronisierung und Multiplexierung der im ersten Verarbeitungsblock (82) verschlüsselten und komprimierten Erfassungssignale (SCV) durchführt.

## Claims

1. A system for remotely driving (1) a driverless vehicle (2), of the motorized land vehicle type, travelling within an environment, said system for remotely driving (1) comprising the driverless vehicle (2) and a remote driving station (3) remotely connected to the driverless vehicle (2) via a communication channel established in a telecommunication network (4),
• said driverless vehicle (2) comprising:
- control devices (201, 202, 203) to control a displacement of the driverless vehicle (2) and comprising at least a brake control device (201), a steering control device (202) and an acceleration control device (203);
- several vehicle sensors (211, 212, 213, 214, 215) coupled to the driverless vehicle (2), including at least an optical sensor (211) and an acoustic sensor (212) for capturing optical and acoustic analog signals from the environment within which the driverless vehicle (2) travels, at least a movement sensor (213; 214) for capturing movements within the driverless vehicle (2), and at least a state sensor (215) for capturing a state information relating to the driverless vehicle (2);
- a driver telepresence terminal (22) connected to the control devices (201, 202, 203) to control them according to remote driving signals (SCD) coming from the remote driving station (3), said driver telepresence terminal (22) being also connected to the vehicle sensors (211, 212, 213, 214, 215) to receive their captured signals (SCV);
- a telecommunication device (25) connected to the driver telepresence terminal (22) and intended to establish a remote communication with the remote driving station (3) via the telecommunication network (4) in order to receive remote driving signals (SCD) and to emit the captured signals (SCV) originating from the vehicle sensors (211, 212, 213, 214, 215);
- an autonomous or assisted driving unit (23) connected to the control devices (201, 202, 203) and connected to the driver telepresence terminal (22) for an exclusive control of the control devices (201, 202, 203) by the autonomous or assisted driving unit (23) or by the driver telepresence terminal (22) according to a comparison between at least one driving parameter measured in real-time and at least one associated safety threshold;
• said remote driving station (3) comprising:
- a seating station (30) to seat a driver (CO);
- piloting devices (301, 302, 303) comprising at least a brake piloting device (301), a steering piloting device (302) and an acceleration piloting device (303), on which the driver (CO) can act to produce remote control signals (SCD);
- remote driving emitters (311, 312, 313, 314, 315) including at least an optical emitter (311) to replicate the optical analog signals captured by said at least one optical sensor (211) of the driverless vehicle (2), at least an acoustic emitter (312) to replicate the acoustic analog signals captured by said at least one acoustic sensor (212) of the driverless vehicle (2), at least a movement emitter (313; 314) to replicate the movements captured by said at least one movement sensor (213; 214) of the driverless vehicle (2), and at least a state emitter (315) to inform the driver (CO) on the state information captured by said at least one state sensor (215) of the driverless vehicle (2);
- a vehicle telepresence terminal (32) connected to the piloting devices (301, 302, 303) to receive the remote driving signals (SCD), said vehicle telepresence terminal (32) being also connected to the remote driving emitters (311, 312, 313, 314, 315) to control them according to the captured signals (SCV) originating from the vehicle sensors (211, 212, 213, 214, 215);
- a communication device (35) connected to the vehicle telepresence terminal (32) and intended to establish a remote connection with the driverless vehicle (2) via the telecommunication network (4) in order to receive the captured signals (SCV) originating from the vehicle sensors (211, 212, 213, 214, 215) and to emit the remote driving signals (SCD);
said system for remotely driving (1) being **characterized in that** it further comprises interaction means (36, 37, 350, 26, 27, 6) enabling a driver (CO) present in the remote driving station (3) to interact in a bidirectional manner with one or several person(s) present around the driverless vehicle (2) thanks to bidirectional optical and acoustic transmissions between the driverless vehicle (2) and the remote driving station (3), said interaction means comprising:
• station sensors (36, 37, 350) present on the remote driving station (3) including at least an optical sensor (36) and an acoustic sensor (37) for capturing optical and acoustic analog signals coming from the seating station (30) seating the driver (CO), and the vehicle telepresence terminal (32) is connected to the station sensors (36, 37, 350) to receive their captured signals (SCP) and to communicate them to the driverless vehicle (2) via the telecommunication devices (25, 35);
• vehicle emitters (26, 27) present on the driverless vehicle (2) including at least an optical emitter (26) to replicate the optical analog signals captured by said at least one optical sensor (36) of the remote driving station (3) and at least an acoustic emitter (27) to replicate the acoustic analog signals captured by said at least one acoustic sensor (37) of the remote driving station (3), and the driver telepresence terminal (22) is connected to the vehicle emitters (26, 27) to control them according to the captured signals (SCP) of the station sensors (36, 37, 350);
• a transmission tool (6) managing the transmission of the captured signals (SCP, SCV) and the remote driving signals (SCD) continuously on either side of the communication channel between the driverless vehicle (2) and the remote driving station (3), wherein the transmission tool (6) manages an uplink stream (61) which originates from the remote driving station (3) to be transmitted to the driverless vehicle (2), and a downlink stream (62) which originates from the driverless vehicle (2) to be transmitted to the remote driving station (3), and where the transmission tool (6) comprises for the downlink stream (62) processing means (81, 82) implementing a synchronization of the captured signals (SCV) originating from the vehicle sensors (211, 212, 213, 214, 215) between them;
wherein the transmission tool (6) comprises for the uplink stream (61) processing means (71, 72) implementing a synchronization of the remote driving signals (SCD) originating from the piloting devices (301, 302, 303) and of the captured signals (SCP) originating from the station sensors (36, 37, 350).

2. The system for remotely driving (1) according to any one of the preceding claims, wherein the driverless vehicle (2) has a windshield and right and left windows (29) and the at least one optical emitter (26) of the driverless vehicle (2) is disposed inside the driverless vehicle (2) so as to be visible from outside via the windshield and right and left windows (29).

3. The system for remotely driving (1) according to claim 2, wherein the at least one optical emitter (26) comprises a front display system placed opposite the windshield (29), a right display system placed opposite the right window (29) and a left display system placed opposite the left window (29).

4. The system for remotely driving (1) according to any one of the preceding claims, wherein the at least one movement sensor (213; 214) of the driverless vehicle (2) comprises at least an inertial unit (213) measuring the roll, pitch and yaw movements of the driverless vehicle (2) at a driving location, and the at least one movement emitter (313; 314) comprises at least an actuator (313) to replicate the roll, pitch and yaw movements in the seating station (30) of the remote driving station (3).

5. The system for remotely driving (1) according to any one of the preceding claims, wherein the at least one movement sensor (213; 214) of the driverless vehicle (2) comprises accelerometers measuring the vibrations at the level of the control devices (201, 202, 203) at a driving location, and the at least one movement emitter (313; 314) comprises vibrators (314) to replicate the vibrations in the corresponding piloting devices (301, 302, 303) of the remote driving station (3).

6. The system for remotely driving (1) according to any one of the preceding claims, wherein the autonomous or assisted driving unit (23) comprises a selection means implementing a selection between:
- an autonomous or assisted piloting mode corresponding to piloting exclusively by the autonomous or assisted driving unit (23); or
- a remote piloting mode corresponding to piloting by the remote driver (CO);
and wherein the selection means is designed so as to implement:
- a collection of information relating to one or several driving parameter(s);
- a comparison of the driving parameter(s) with one or several associated safety threshold(s);
- an activation of the autonomous or assisted piloting mode if one of the driving parameters exceeds the corresponding safety threshold.

7. The system for remotely driving (1) according to claim 6, wherein the driving parameters comprise at least one communication parameter representative of the communication channel established between the telecommunication devices (25, 26).

8. The system for remotely driving (1) according to claim 7, wherein the communication parameter is selected amongst at least one of the following parameters:
- a parameter representative of a signal quality;
- a parameter representative of a transmission speed;
- a parameter representative of a transmission latency;
- a parameter representative of a bandwidth of the communication;
- a parameter representative of a transmission rate;
- a parameter representative of an authentication of the data;
- a parameter representative of a synchronization between the driver telepresence terminal (22) and the vehicle telepresence terminal (32) which communicate in the communication channel.

9. The system for remotely driving (1) according to any one of the claims 6 to 8, wherein the driving parameters comprise at least one parameter selected amongst the following parameters:
- a parameter representative of a trajectory or of a direction of the driverless vehicle (2);
- a parameter representative of a speed or of an acceleration or of a deceleration of the driverless vehicle (2);
- a parameter representative of a presence of an obstacle on the trajectory of the driverless vehicle (2);
- a parameter representative of a responsiveness level of the driver (CO).

10. The system for remotely driving (1) according to claims 6, 7, 8 and 9, wherein the selection means is designed so as to implement:
- a collection of information relating to one or several communication parameter(s);
- a collection of information relating to a parameter representative of a speed of the driverless vehicle (2);
- a collection of information relating to a parameter representative of a presence of an obstacle on the trajectory of the driverless vehicle (2);
- an assessment of a remote driving safety distance (DSC) based on the parameter representative of a speed of the driverless vehicle (2) and at least one communication parameter;
- an assessment of a safety limit distance (LS) established on the basis of the parameter representative of a presence of an obstacle on the trajectory of the driverless vehicle (2), the parameter representative of a speed of the driverless vehicle (2) and a maximum response time between the apparition of an obstacle on the trajectory of the driverless vehicle (2) and the action of the driver (CO) on the driverless vehicle (2) in a remote piloting mode;
- an activation of the autonomous or assisted piloting mode if the remote driving safety distance (DSC) exceeds the safety limit distance (LS).

11. The system for remotely driving (1) according to any one of the preceding claims, wherein the processing means (71, 72) of the transmission tool (6) for the uplink stream (61) implement a synchronization and a multiplexing of the remote driving signals (SCD) originating from the piloting devices (301, 302, 303) and of the captured signals (SCP) originating from the station sensors (36, 37, 350).

12. The system for remotely driving (1) according to claim 11, wherein the processing means (71, 72) of the transmission tool (6) for the uplink stream (61) comprise a first processing block (71) implementing an encoding and a compression of the captured signals (SCP) originating from the station sensors (36, 37, 350), followed by a second processing block (72) implementing a synchronization and a multiplexing of the remote driving signals (SCD) originating from the piloting devices (301, 302, 303) and of the captured signals (SCP) encoded and compressed in the first processing block (71).

13. The system for remotely driving (1) according to any one of the preceding claims, wherein the processing means (81, 82) of the transmission tool (6) for the downlink stream (62) implementing a synchronization and a multiplexing of the captured signals (SCV) originating from the vehicle sensors (211, 212, 213, 214, 215).

14. The system for remotely driving (1) according to claim 13, wherein the processing means (71, 72) of the transmission tool (6) for the downlink stream (62) comprise a first processing block (81) implementing an encoding and a compression of the captured signals (SCV) originating from the vehicle sensors (211, 212, 213, 214, 215), followed by a second processing block (82) implementing a synchronization and a multiplexing of the captured signals (SCV) encoded and compressed in the first processing block (82).
